# EUROPEAN PATENT APPLICATION

(11) **EP 4 322 417 A2**
(43) Date of publication of application: **14.02.2024**
(21) Application number: 23198629.0
(22) Date of filing: 09.05.2019
(51) Int. Cl.: H04B 7/0452

(54) **POINT-TO-MULTIPOINT SHARED-ACCESS FULL-DUPLEX WIRELESS DUPLEXING SCHEME ASSOCIATED WITH SPATIAL DIVERSITY**

(30) Priority: 11.05.2018 EP 18171862
(62) Divisional of application: 19721649.2
(71) Applicant: Fraunhofer-Gesellschaft zur Förderung der angewandten Forschung e.V., 80686 München (DE)
(72) Inventor: ASKAR, Ramez, 10587 Berlin (DE); KEUSGEN, Wilhelm, 10587 Berlin (DE); HAUSTEIN, Thomas, 10587 Berlin (DE)
(74) Representative: Zimmermann, Tankred Klaus

(57) **Abstract**

A base station for a wireless communication system is described. The wireless communication system includes a plurality of UEs, the plurality of UEs including at least a first UE and a second UE. The base station configured to serve the plurality of UEs. Further, base station is configured to provide a plurality of beams or spatial links for a wireless communication with the plurality of UEs, the plurality of beams including at least a first beam or spatial link for a wireless communication with the first UE and a second beam or spatial link for a wireless communication with the second UE, transmit to the first UE on the first beam or spatial link using frequency resources within a DL frequency band, transmit to the second UE on the second beam or spatial link using frequency resources within the DL frequency band, wherein the DL frequency band and a UL frequency band overlap at least partially, the overlapping parts of the DL frequency band and the UL frequency band defining an overlapping frequency band, concurrently transmit and receive in the overlapping frequency band, and cancel one or more transmission signals at least in presence of one or more concurrent receive signals from the first UE or from the second UE in the overlapping frequency band. The base station is configured to transmit to and receive from the first UE and the second UE using respective frequency resources in the overlapping frequency band.

## Description

The present application concerns the field of wireless communications, more specifically a point-to-multipoint communication, for example from a base station to a plurality of user equipments UEs, increasing the resource utilization efficiency in a wireless communication network or system. Embodiments relate to a point-to-multipoint shared-access full-duplex wireless duplexing scheme associated with spatial diversity.

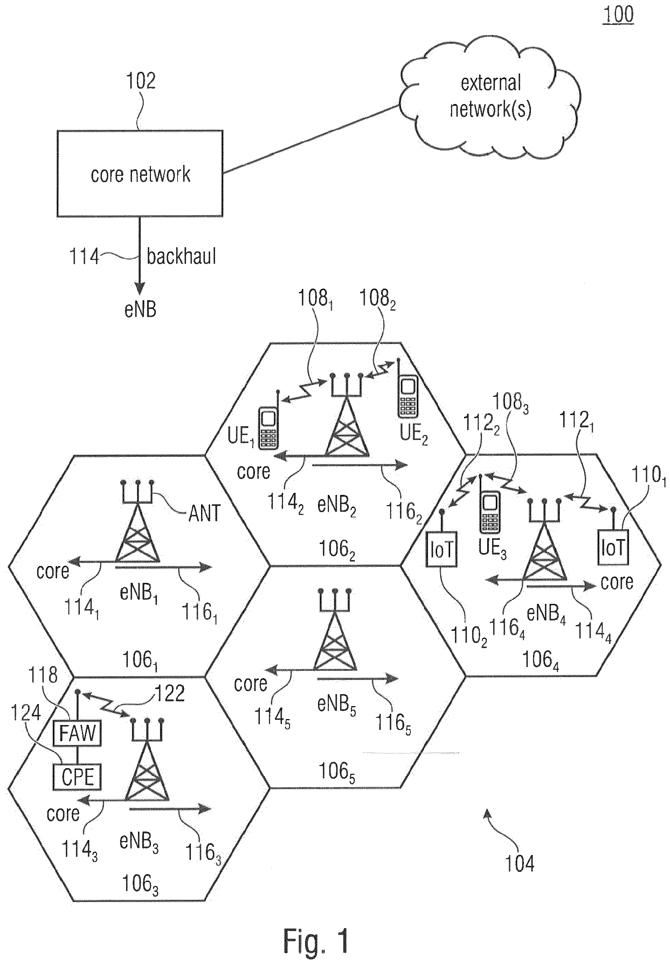

Fig. 1 is a schematic representation of an example of a terrestrial wireless network 100 including a core network 102 and a radio access network 104. The radio access network 104 may include a plurality of base stations gNB₁ to gNB₅, each serving a specific area surrounding the base station schematically represented by respective cells 106₁ to 106₅. The base stations are provided to serve users within a cell. The term base station, BS, refers to as gNB in 5G networks, eNB in **UMTS/LTE/LTE-A/** LTE-A Pro, or just BS in other mobile communication standards. A user may be a stationary device or a mobile device and can be referred to as user equipment (UE), user terminal or mobile terminal (MT). Further, the wireless communication system may be accessed by mobile or stationary Internet-of-Things (IoT) devices which connect to a base station or to a user equipment. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃.

Further, Fig. 1 shows two loT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂.

Fig. 1 also shows a Fixed Wireless Access, FWA, device 118, e.g. a FWA UE accessing the wireless communication system via the base station gNB₃ to receive and transmit data as schematically represented by arrow 120. The FWA device 118 is coupled to or includes a Customer Premises Equipment, CPE, 124. In case the FWA device 118 is coupled to the CPE, the link may be fixed or wireless, e.g. 5G-based or Wi-Fi based. A FWA network entity provides for a high bandwidth to allow a high data throughput, as required, e.g., by broadband applications, like enhanced Mobile BroadBand, eMBB, services.

The respective base station gNB₁ to gNB₅ may be connected to the core network 102, e.g. via the S1 interface, via respective backhaul links 114₁ to 114₅, which are schematically represented in Fig. 1 by the arrows pointing to "core". The core network (CN) 102 may be connected to one or more external networks. Further, some or all of the respective base station gNB₁ to gNB₃ may connected, e.g. via the S1 or X2 interface or XN interface in NR, with each other via respective backhaul links 116₁ to 116₅, which are schematically represented in Fig. 1 by the arrows pointing to "gNBs". The wireless network or communication system depicted in Fig. 1 may by an heterogeneous network having two distinct overlaid networks, a network of macro cells with each macro cell including a macro base station, like base station gNB₁ to gNB₅, and a network of small cell base stations (not shown in Fig. 1), like femto or pico base stations.

For data transmission a physical resource grid may be used. The physical resource grid may comprise a set of resource elements or logical channels to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. In another example, two UEs are communicating in a direct mode (D2D). In LTE networks, this interface is defined as PC5. Here, the physical channels include sidelink control information (SCI) carried over a physical sidelink control channel (PSCCH), and user data, transmitted via physical sidelink data channel (PSDCH).

The physical signals may comprise reference signals (RS), synchronization signals and the like. The resource grid may comprise a frame or radioframe having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

In the wireless communication network as shown in Fig. 1 the radio access network 104 may be a heterogeneous network including a network of primary cells, each including a primary base station, also referred to as a macro base station. Further, a plurality of secondary base stations, also referred to as small cell base stations, may be provided for each of the macro cells.

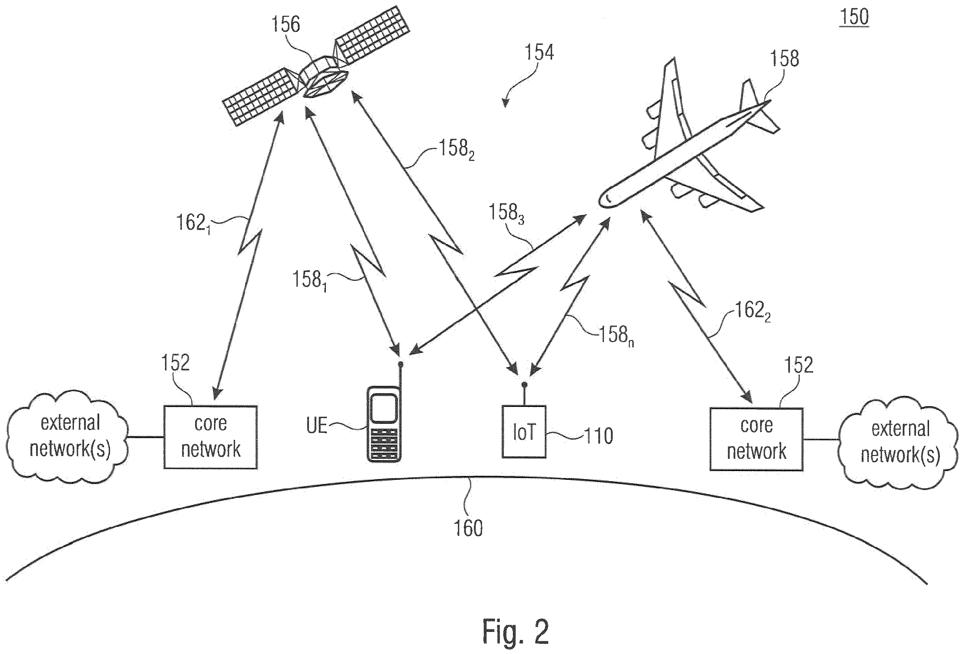

In addition to the above described terrestrial wireless network also non-terrestrial wireless communication networks exist. Fig. 2 is a schematic representation of an example of a non-terrestrial wireless communication network 150 including a core network 152 and a radio access network 154. Other than the terrestrial wireless network of Fig. 1, the non-terrestrial wireless network 150 includes a plurality of spaceborne transceivers 156, like satellites, and/or airborne transceivers 158, like unmanned aircraft systems. The respective spaceborne or airborne transceivers 156, 158 may be implemented in respective spaceborne or airborne vehicles, like the above mentioned satellites or unmanned aircraft systems. The transceivers 156 and 158 are provided to serve one or more users, like the UE or the loT device 110 shown in Fig. 2, which are provided on or above ground 160. The UE and the loT device may be devices as described above with reference to Fig. 1. The arrows 158₁ to 158₄ schematically represent uplink/downlink connections for communicating data between the user UE, 110 and the respective transceiver 156, 158. The transceivers 156, 158 are connected to the core network 152 as is schematically represented by the arrows 162₁, 162₂. The above described non-terrestrial wireless communication network or system may operate in a similar way as the terrestrial system described above with reference to Fig. 1, for example in accordance with the LTE-Advanced Pro standard or the 5G or NR, New Radio, standard.

In wireless communication networks as described above, various services may be implemented. Some services may require an ultra-reliable communication, for example ultra-reliable low latency communication, URLLC, or highly-reliable low latency communication, HRLLC, services. URLLC targets a high reliability at very low latencies so that systems implementing ultra-low latency services support round trip time, RTT, latencies of only a few milliseconds, for example 1ms RTT. To address such short RTT latencies, known approaches use the above mentioned short transmission time intervals, sTTls. While the reduced RTT addresses the latency issue, there is still the reliability issue which is closely related to the reliability of the control information received at the UE. While improving the data channel may be straight-forward, for example by lowering the code rate and / or by adapting the modulation and coding scheme, this is not so straight-forward in the control channel. For example, the supported lowest code rate in the physical downlink control channel, PDCCH, may be limited due the substantially fixed, less flexible structure of the PDCCH. With regard to the receipt of control messages in the control channel, the missing probability and the false positive probability are to be observed, especially for ultra-reliable service or for URLLC services. The missing probability is the probability to miss a control message, like a DCI message, in the control channel, and the false positive probability is the probability to erroneously detect or identify a control message not intended for the UE, which may happen, for example, in case a of blind decoding process that produces a valid CRC (see below) although the signal detected was no DCI message for the UE. Note, in case of the LTE technology (LTE, LTE-A, LTE-A Pro), due to backwards compatibility reasons, choosing a different channel coding scheme to better support URLLC services is not possible. This would break the compatibility with existing LTE user terminals. Furthermore, the techniques proposed in this invention can equally be applied to future radio standards, e.g. 5G NR, and thus bring reliability enhancements to future cellular technologies.

Wireless communication networks or systems as described above with reference to Fig. 1 or Fig. 2 utilize wireless medium resources - most prominently the time and frequency resources -- either in a time duplexing manner or in a frequency duplexing manner, also referred to as time division duplex, TDD, and frequency division duplex, FDD. On the basis of these techniques a bidirectional communication link between two communication nodes may be established, when considering a point-to-point scenario. In case of two spatially-coexisting communication links the potential interference between these links needs to be handled, for example by using spectral filters, such as duplexers, in the FDD case or by using distinct time slots in the TDD case. Applying these techniques allows realizing a bidirectional link.

In other words, the FDD scheme and the TDD scheme are used to split the available time-frequency resources of the wireless communication network among those entities involved in the communication. However, splitting the available time-frequency resources among the communicating-involved entities causes a half-duplex communication since the transmission and the reception are not performed at the same time and frequency, so that the time-frequency resources of the wireless communication network are not efficiently utilized.

It is noted that the information in the above section is only for enhancing the understanding of the background of the invention and therefore it may contain information that does not form the prior art that is already known to a person of ordinary skill in the art.

It is an object underlying the present invention to provide an approach for a communication in a wireless communication network improving the efficiency with which the available resources of the wireless communication network are used for a wireless communication among respective network entities.

This object is achieved by the subject-matter as defined in the independent claims, and favorable further developments are defined in the pending claims.

Embodiments of the present invention are now described in further detail with reference to the accompanying drawings, in which:
- Fig. 1: is a schematic representation of an example of a terrestrial wireless communication system;
- Fig. 2: is a schematic representation of an example of a non-terrestrial wireless communication network;
- Fig. 3(a): is a schematic representation of a wireless communication network for communicating information between a base station and a plurality of UEs in accordance with a first aspect of the inventive teachings described herein, wherein the base station concurrently transmits to and receives from a plurality of UEs using a spatial diversity and a frequency division multiplexing, FDM, communication;
- Fig. 3(b): is a schematic representation of a wireless communication network for communicating information between a base station and a plurality of UEs in accordance with a second aspect of the inventive teachings described herein, wherein the base station concurrently transmits to and receives from a plurality of UEs using a frequency division multiplexing, FDM, communication without spatial diversity;
- Fig. 3(c): is a schematic representation of a wireless communication network for communicating information between a base station and a plurality of UEs in accordance with a third aspect of the inventive teachings described herein, wherein the base station concurrently transmits to and receives from a plurality of UEs using a spatial diversity and a time division multiplexing, TDM, communication;
- Fig. 3(d): is a schematic representation of a wireless communication network for communicating information between a base station and a plurality of UEs in accordance with a fourth aspect of the inventive teachings described herein, wherein the base station concurrently transmits to and receives from a plurality of UEs a time division multiplexing, TDM, communication without spatial diversity, and wherein the UEs employ beamforming for inter-UE-interference suppression;
- Fig. 4: illustrates an embodiment of the inventive duplexing scheme in a scenario implementing a point-to-multipoint shared-access full-duplex wireless duplexing scheme associated with a spatial diversity, with a partial overlap between the downlink, DL, and uplink, UL, frequency bands;
- Fig. 5: illustrates a wireless communication system in accordance with an embodiment implementing a full UL band allocation;
- Fig. 6: illustrates an embodiment of the inventive approach employing a UL distributed subcarrier allocation adopting a sub-carrier based UL-FDM scheme for sharing the bandwidth available for the UL among the UEs;
- Fig. 7: illustrates an embodiment of a duplexing scheme implementing the UL sub-band hopping allocation, like a sweeping or rotating allocation scheme;
- Fig. 8: illustrates an embodiment of the inventive UL sub-band reusing scheme ;
- Fig. 9: illustrates how an inter-UE interference may be caused among neighboring UEs due to the reuse of the same UL sub-band at the neighboring UEs;
- Fig. 10: illustrates an embodiment of the inventive approach in which, in a scenario as depicted in Fig. 9, the UEs utilize their null-steering features to allow a reuse scheme of sub-bands in adjacent UEs;
- Fig. 11: illustrates a wireless communication system in accordance with an embodiment in which three UEs share a band within the same beam;
- Fig. 12: illustrates an embodiment of the inventive approach implementing an overlapped DL-UL sub-band scheme;
- Fig. 13: illustrates an embodiment in which some UEs operate in accordance with the DL-UL sub-band permutation embodiment of Fig. 11, and in which other UEs operates in accordance with the overlapped DL-UL sub-band embodiment of Fig. 12;
- Fig. 14: illustrates a situation in which inter-UE interference denies a UE from receiving a sub-band in the downlink communication;
- Fig. 15: illustrates an embodiment for implementing a reduced UL sub-band occupancy by releasing a DL sub-band to be free of any interferences;
- Fig. 16: illustrates an embodiment for a multiple overlap sub-bands UL allocation in accordance with which the UE UL sub-bands are overlapped so that the remaining parts of the spectrum or the remaining bandwidths of the full frequency band may be used for the downlink parts;
- Fig. 17(a): illustrates an embodiment implementing a reduced DL band allocation;
- Fig. 17(b): illustrates an embodiment implementing a reduced DL band allocation with partial SIC at the UEs.
- Fig. 18: illustrates an embodiment for a flexible time-division multiple access in accordance with the present invention;
- Fig. 19: illustrates an embodiment for implementing a null-steering technique in respective transmit beam patterns of UEs in the wireless communication network of Fig. 18 so as to suppress inter-UE interferences;
- Fig. 20: illustrates an embodiment for implementing a null-steering technique in respective receive beam patterns of UEs;
- Fig. 21: illustrates an embodiment for implementing a null-steering technique in respective transmit and receive beam patterns of UEs;
- Fig. 22: illustrates an embodiment for base station scheduling based on UE distribution;

- Fig. 23: illustrates an embodiment of the inventive approach implementing an asymmetrical and dynamic time slot allocation by receive beamforming and SIC capabilities at the base station;
- Fig. 24: illustrates an embodiment of the inventive approach implementing the asymmetrical and dynamic time slot allocation of Fig. 23 in which the UEs share the time slots for the uplink;
- Fig. 25: illustrates an embodiment according to which a base station discriminates uplink time slots from respective UEs based on the geographical locations of the UEs; and
- Fig. 26: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned. Embodiments of the present invention may be implemented in a wireless communication system or network as depicted in Fig. 1 or in Fig. 2 including transmitters or receivers, like base stations and users, for example mobile or stationary terminals or loT devices, as mentioned above.

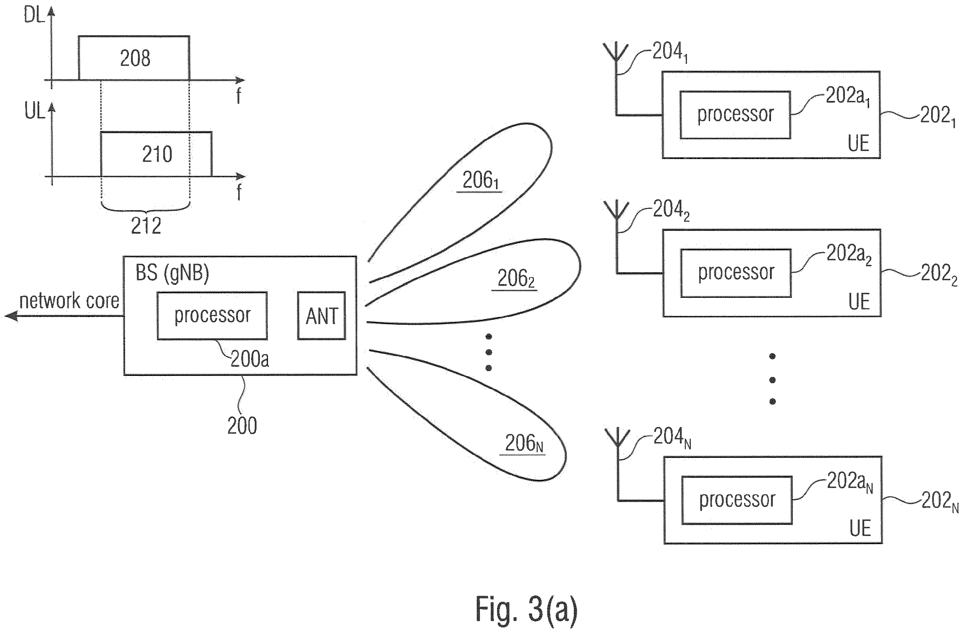

Fig. 3(a) to Fig. 3(d) are schematic representations of wireless communication systems for communicating information between a base station 200 and a plurality of UEs 202₁ and 202₂. It is noted that the inventive approach is not limited to two UEs, rather, any number of UEs may be served by the base station 200, as is schematically indicated in Fig. 3(a) to Fig. 3(d) showing additional UE 202_{N}. The base station 200 and the respective UEs communicate with each other via respective wireless communication links or channels, like respective radio links. The base station 200 includes a plurality of antennas ANT or an antenna array having a plurality of antenna elements, and a signal processor 200a. The UEs 202₁ to 202_{N} may include one or more antennas 204, to 204_{N} or respective antenna arrays having a plurality of antenna elements, and respective signal processors 202a, to 202a_{N}. The wireless communication network, the base station 200 and the respective UEs 202₁ to 202_{N} may operate in accordance with the inventive teachings described herein.

Fig. 3(a) illustrates a schematic representation of a wireless communication network in accordance with a first aspect of the present invention in which the base station 200 concurrently transmits to and receives from a plurality of UEs 202₁ to 202_{N} using spatial diversity and a frequency division multiplexing, FDM, communication. In accordance with the first aspect of the inventive approach, a wireless communication system is provided which includes a plurality of UEs 202₁ to 202_{N}, wherein the plurality of UEs includes at least a first UE 202, and a second UE 202₂. The wireless communication system includes at least one base station 200 to serve the plurality of UEs.

The base station 200 provides a plurality of beams or spatial links 206₁ to 206_{N} for a wireless communication with the plurality of UEs 202₁ to 202_{N}. The plurality of beams 206, to 206_{N} include at least a first beam or spatial link 206, for a wireless communication with the first UE 202, and a second beam or spatial link 206₂ for a wireless communication with the second UE 202₂. The base station 200 transmits to the first UE 202₁ on the first beam or spatial link 206, using frequency resources within a DL frequency band 208. The base station 200 transmits to the second UE 202₂ on the second beam or spatial link 206₂ using frequency resources within the DL frequency band 208. The DL frequency band 208 and a UL frequency band 210 overlap at least partially, and the overlapping parts of the DL frequency band 208 and the UL frequency band 210 define an overlapping frequency band 212. The base station 200 concurrently transmits and receives in the overlapping frequency band 212, and cancels one or more transmission signals at least in presence of one or more concurrent receive signals from the first UE 202, or from the second UE 202₂ in the overlapping frequency band 212.

The first UE 202₁ and the second UE 202₂ transmit to and receive from the base station 200 using respective frequency resources in the overlapping frequency band 212.

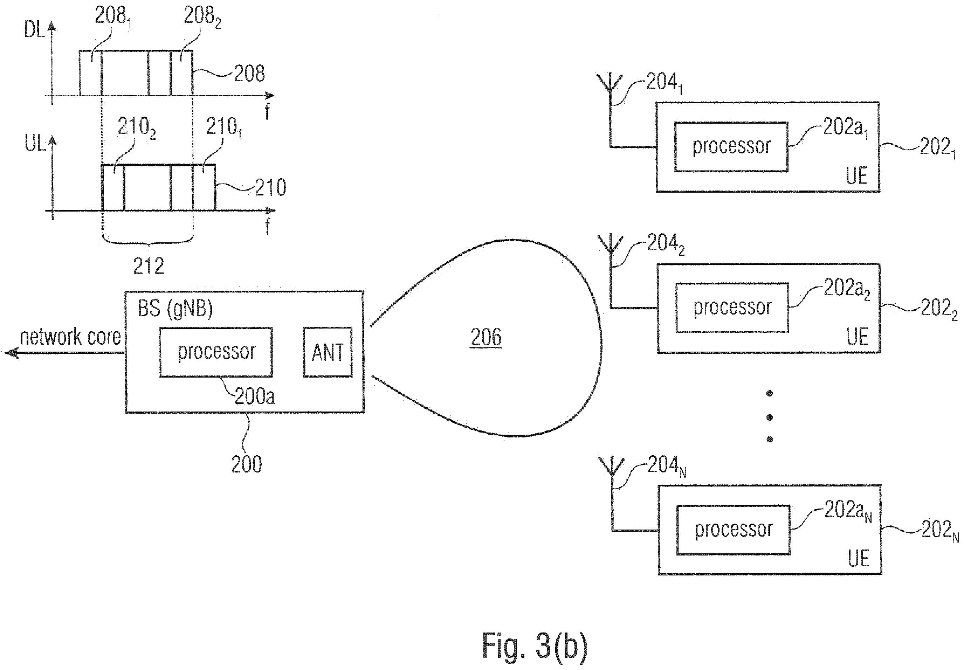

Fig. 3(b) illustrates a schematic representation of a wireless communication network in accordance with a second aspect of the present invention in which the base station 200 concurrently transmits to and receives from a plurality of UEs 202₁ to 202_{N} using a frequency division multiplexing, FDM, communication without spatial diversity, e.g., using one beam or spatial links 206 for a wireless communication with the plurality of UEs 202₁ to 202_{N}. In accordance with the second aspect of the inventive approach, a wireless communication system is provided which includes a plurality of UEs 202₁ to 202_{N}, wherein the plurality of UEs includes at least a first UE 202, and a second UE 202₂. The wireless communication system includes at least one base station 200 to serve the plurality of UEs.

The base station 200 transmits to the first UE 202, using a first DL subband 208₁ of the DL frequency band 208 and transmits to the second UE 202, using a second DL 208₂ subband of the DL frequency band 208. The DL frequency band 208 and a UL frequency band 210 overlap at least partially, and the overlapping parts of the DL frequency band 208 and the UL frequency band 210 define an overlapping frequency band 212. The base station 200 concurrently transmits and receives in the overlapping frequency band 212, and cancels one or more transmission signals at least in presence of one or more concurrent receive signals from the first UE 202₁ or from the second UE 202₂ in the overlapping frequency band 212.

The first UE 202, and the second UE 202₂ transmit to the base station 200 using respective subbands 210₁, 210₂ in the overlapping frequency band 212. The first UE 202₁ transmits to the base station 200 using a first UL subband 210₁ in the overlapping frequency band 212, and the first UL subband 210, is selected such a signal in the first DL subband 208, is successfully received by the first UE 202₁. The second UE 202₂ transmits to the base station 200 using a second UL subband 210₂ in the overlapping frequency band 212. The second UL subband 210₂ is selected such a signal in a second DL subband 208₂ is successfully received by the second UE 202₂. For example, the first and second UEs 202₁ and 202₂ may cancel at least partially, e.g., power-wise, their own transmission signals..

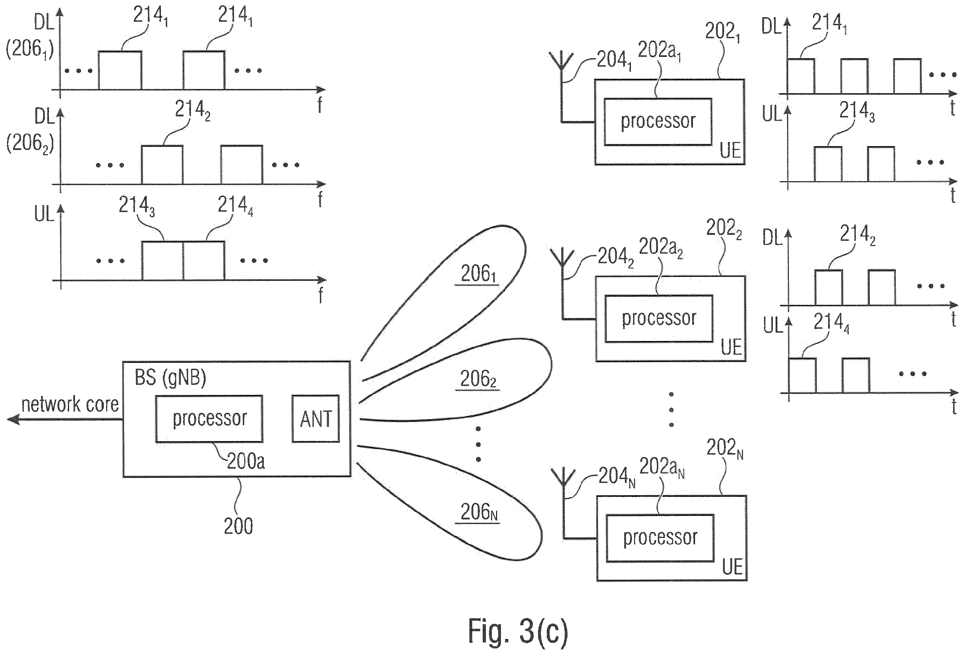

Fig. 3(c) illustrates a schematic representation of a wireless communication network in accordance with a third aspect of the present invention in which the base station 200 concurrently transmits to and receives from a plurality of UEs 202₁ to 202_{N} using spatial diversity and a time division multiplexing, TDM, communication. In accordance with the third aspect of the inventive approach, a wireless communication system is provided which includes a plurality of UEs 202₁ to 202_{N}, wherein the plurality of UEs includes at least a first UE 202, and a second UE 202₂. The wireless communication system includes at least one base station 200 to serve the plurality of UEs.

The first UE 202, and the second UE 202₂ transmit to and receive from the base station 200 using time resources within a TDD frequency band.

The base station 200 provides a plurality of beams or spatial links 206₁ to 206_{N} for a wireless communication with the plurality of UEs 202₁ to 202_{N}. The plurality of beams 206₁ to 206_{N} include at least a first beam or spatial link 206, for a wireless communication with the first UE 202, and a second beam or spatial link 206₂ for a wireless communication with the second UE 202₂. The base station 200 transmits to the first UE 202, on the first beam or spatial link 206₁ using one or more first DL time resources 214, in the TDD frequency band. The base station 200 transmits to the second UE 202₂ on the second beam or spatial link 206₂ using one or more second DL time resources 214₂ in the TDD frequency band. The base station 200 concurrently transmits and receives in the TDD frequency band, and cancels one or more transmission signals at least in presence of one or more concurrent receive signals from the first UE 202, or from the second UE 202₂ in the TDD frequency band.

The first UE 202₁ transmits to the base station 200 using one or more first UL time resources 214₃ in the TDD frequency band, and a first UL time resource 214₃ overlaps at least partially a second DL time resource 214₂ in the TDD frequency band. The second UE 202₂ transmits to the base station 200 using one or more second UL time resources 214₄ in the TDD frequency band, and a second UL time resource 214₄ overlaps at least partially a first DL time resource 214₁ in the TDD frequency band.

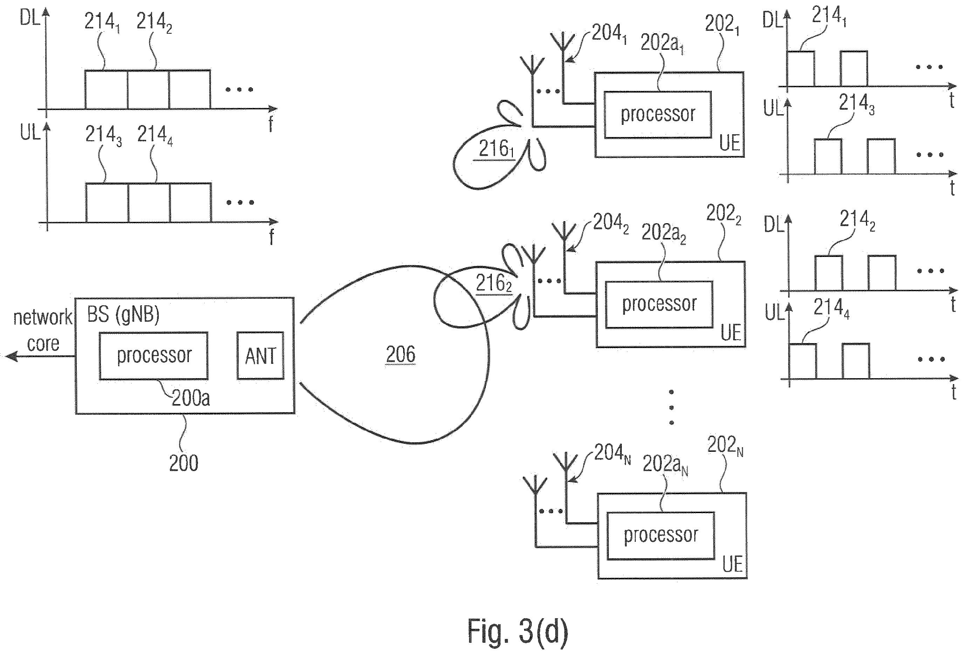

Fig. 3(d) illustrates a schematic representation of a wireless communication network in accordance with a fourth aspect of the present invention in which the base station 200 concurrently transmits to and receives from a plurality of UEs 202₁ to 202_{N} using a time division multiplexing, TDM, communication without spatial diversity, e.g., using one beam or spatial links 206 for a wireless communication with the plurality of UEs 202₁ to 202_{N}, and the UEs employ beamforming for inter-UE-interference suppression. In accordance with the fourth aspect of the inventive approach, a wireless communication system is provided which includes a plurality of UEs 202₁ to 202_{N}, wherein the plurality of UEs includes at least a first UE 202, and a second UE 202₂. The wireless communication system includes at least one base station 200 to serve the plurality of UEs. The first UE 202, and the second UE 202₂ transmit to and receive from the base station 200 using time resources within a TDD frequency band.

The base station 200 transmits to the first UE 202, using one or more first DL time slots 214₁ in the TDD frequency band. The base station 200 transmits to the second UE 202₂ using one or more second DL time slots 214₂ in the TDD frequency band. The base station 200 concurrently transmits and receives in the TDD frequency band, and cancels one or more transmission signals at least in presence of one or more concurrent receive signals from the first UE 202, or from the second UE 202₂ in the TDD frequency band.

The first UE 202, transmits to the base station 200 using one or more first UL time slots 214₃ in the TDD frequency band, and a first UL time slot 214₁ overlaps at least partially a second time slot 214₃ in the TDD frequency band.

The second UE 202₂ transmits to the base station 200 using one or more second UL time slots 214₄ in the TDD frequency band, and a second UL time slot 214₄ overlaps at least partially a first time slot 214₁ in the TDD frequency band.

The first UE 202, comprises the plurality of antennas or the antenna array 204₁, and the first UE 214₂ controls the antennas or the antenna array 204, so as to set a receive beam pattern and/or a transmit beam pattern 216₁ of the antenna such that a radiation towards the base station 200 is stronger than a radiation towards the second UE 202₂, and/or the second UE 202₂ comprises the plurality of antennas or the antenna array 204₂, and the second UE 202₂ controls the antennas or the antenna array 204₂ so as to set a receive beam pattern and/or a transmit beam pattern 216₂ of the antenna such that a radiation towards the base station 200 is stronger than a radiation towards the first UE 202₁.

The base station 200, in accordance with the inventive approach, may be a base station operating in accordance with a full-duplex scheme. Thus, the base station is capable to be operated in a full-duplex mode allowing the base station to concurrently or simultaneously receive and transmit on the same resources. In accordance with embodiments, the UEs do not have a full duplex capability. In accordance with other embodiments, one or more of the UEs may have full-duplex capabilities.

In accordance with embodiments of the inventive approach, a duplexing scheme and a resource allocation technique is provided which is advantageous as it uses the available space-time-frequency network resources of the wireless communication system in a highly efficient manner. Embodiments allow for a dynamic resource allocation based, for example, on demands for respective communication links among the network entities. Relying on the actual capabilities of the respective network entities, like the base station and the UEs, embodiments of the inventive approach, which implement the inventive combination of duplexing and resource allocation, allow for an increase in the throughput and for serving multiple communication links at the same time. Further embodiments may employ beamforming techniques combined with a full-duplex operation, at least at the base station, which is advantageous as it allows achieving a partial spectral overlap over the spatially collocated links, thereby maximizing the utilization efficiency for space-time-frequency resource blocks. In other words, embodiments of the present invention provide, at least at the base station, a duplexing scheme which allows increasing the network space-time-frequency resource utilization efficiency by exploiting self-interference suppression techniques and spatial techniques, like beamforming, for achieving a more efficient use of resources, for example in scenarios using a FDD scheme or a TDD scheme.

The inventive approach is advantageous as introducing a full-duplex scheme, at least at the base station, allows for a better utilization of the available resources. For example, at the base station the signal transmission and the signal reception may occur at the same time and, to allow for such a reuse of the resources, like the frequency or time resources for doubling the spectral efficiency, the base station may implement a self-interference cancellation, SIC, methods, e.g., a SIC method described in one of references [1] to [8]. SIC allows the full-duplex operation, thereby enabling symmetrical transmissions for the uplink, UL, and for the downlink, DL, to occupy the same resource, e.g., the same frequency band or the same time slots during UL and DL, while keeping an uninterrupted bidirectional link over the time. Although utilizing the full-duplex scheme combined with the TDD at a user has been reported in reference [8], it has been found that the symmetrical nature of the full-duplex wireless communication scheme at the base station and at the UE is not suitable due to the inter-UE interferences.

Another known technique allowing utilizing the same time-frequency resources is spatial filtering, also referred to as beamforming, which may be used as long as the respective links are spatially uncorrelated. However, unlike the full-duplex technique, the beamforming approach cannot discriminate two spatially collocated links, due to the fact that the beamforming technique invokes the spatial dimension.

Embodiments of the inventive approach bring together the above mentioned techniques, namely the full-duplex technique and the spatial filtering/beamforming technique in a way avoiding the drawbacks of the individual techniques, and exploiting both the full duplex, FD, and the beamforming technique simultaneously thereby obtaining an improved or optimized use of space-time-frequency resources.

In the following, embodiments of the inventive duplexing scheme increasing the network space-time-frequency resource utilization efficiency will be described in more detail. The schemes in accordance with embodiments of the present invention share the use or exploitation of the SIC technique in order to achieve an improved use of the resources. In the following description the inventive concept of the duplexing scheme will be described as well as specific embodiments providing for further improvements of the resource efficiency. To achieve such improvements in resource utilization efficiency, embodiments of the present invention provide for a point-to-multipoint shared-access full-duplex wireless duplexing scheme combined or associated with spatial diversity. In a point-to-multipoint network constellation a central node, like the base station 200, which may be backhauled to a network core, as has also been described with reference to Fig. 1, may serve or connect to several end users UEs 200₁ to 200_{N} that are located within the coverage range of the base station 200. In accordance with embodiments, an asymmetrical bidirectional link in terms of throughput is considered to be sufficient so as to satisfy the end user connectivity or throughput needs, for example a UE may require a higher throughput on the downlink than on the uplink. Embodiments of the inventive approach as described above with reference to Fig. 3(a) to Fig. 3(d) may implement
- a flexible frequency-division multiple access, or
- a flexible time-division multiple access, or
- a flexible time-frequency-resource-division multiple access.

### First Aspect

In accordance with embodiments of the first aspect, the frequency resources used by the first UE and the second UE for a transmission to and a reception from the base station include one or more sub-bands or one or more sub-carriers.

In accordance with embodiments of the first aspect, for transmitting to the base station, the first UE is configured to transmit to the base station using a first UL sub-band of the overlapping frequency band, and the second UE is configured to transmit to the base station using a second UL sub-band of the overlapping frequency band, the first and second UL sub-bands having the same or different bandwidths.

In accordance with embodiments of the first aspect, no signal cancellation is implemented at the first UE and at the second UE to cancel one or more transmission signals at least in presence of one or more concurrent receive signals from the base station in the overlapping frequency band, and the first UL sub-band and the second UL sub-band do not overlap.

In accordance with embodiments of the first aspect, signal cancellation is implemented in the first UE to cancel one or more transmission signals at least in presence of one or more concurrent receive signals from the base station in the overlapping frequency band, and the first UL sub-band spans the overlapping frequency band.

In accordance with embodiments of the first aspect, the first UE is configured to form a narrow beam towards the base station.

In accordance with embodiments of the first aspect, for transmitting to the base station, the first UE is configured to transmit to the base station using a plurality of first UL subcarriers of the overlapping frequency band, and the second UE is configured to transmit to the base station using a plurality of second UL subcarriers of the overlapping frequency band, the first and second UL subcarriers being different.

In accordance with embodiments of the first aspect, the wireless communication system comprises at least one further UE served by the base station and located with respect to the first UE such that an interference level between the first UE and the further UE is below a threshold, wherein the plurality of beams or spatial links provided by the base station includes at least one further beam or spatial link for a wireless communication with the further UE, and wherein, for transmitting to the base station, the further UE is configured to transmit to the base station using the first UL sub-band or the plurality of first UL subcarriers of the overlapping frequency band.

In accordance with embodiments of the first aspect, the base station is configured to discriminate an UL transmission from the first UE and an UL transmission from the further UE on the spatial properties of the respective UL transmissions.

In accordance with embodiments of the first aspect, the wireless communication system comprises at least one further UE served by the base station, wherein the base station is configured to provide the first beam or spatial link for a wireless communication with the first UE and with the further UE, wherein the base station is configured to transmit to the first UE using a first DL subband of the DL frequency band, and transmit to the further UE using a further DL subband of the DL frequency band, wherein the first UE is configured to transmit to the base station using a first UL subband in the overlapping frequency band, the first UL subband selected such a signal in the first DL subband is successfully received by the first UE, and wherein the further UE is configured to transmit to the base station using a further UL subband in the overlapping frequency band, the further UL subband selected such a signal in the further DL subband is successfully received by the further UE.

In accordance with embodiments of the first aspect, the first DL sub-band and the first UL sub-band do not overlap each other, and the further DL sub-band and the further UL sub-band do not overlap each other.

In accordance with embodiments of the first aspect, signal cancellation is implemented in the first and/or in the further UE to cancel at least a portion from the transmit power of one or more transmission signals at least in presence of one or more concurrent receive signals from the base station in the overlapping frequency band.

In accordance with embodiments of the first aspect, signal cancellation is implemented in the first and/or in the further UE to cancel one or more transmission signals at least in presence of one or more concurrent receive signals from the base station in the overlapping frequency band, and the first DL sub-band and the first UL sub-band and/or the further DL sub-band and the further UL sub-band overlap each other.

### Second Aspect

In accordance with embodiments of the second aspect, the first DL sub-band and the first UL sub-band do not overlap each other, and the second DL sub-band and the second UL sub-band do not overlap each other.

In accordance with embodiments of the second aspect, signal cancellation is implemented in the first and/or in the further UE to cancel at least a portion from the transmit power of one or more transmission signals at least in presence of one or more concurrent receive signals from the base station in the overlapping frequency band.

In accordance with embodiments of the second aspect, signal cancellation is implemented in the first and/or in the second UE to cancel one or more transmission signals at least in presence of one or more concurrent receive signals from the base station in the overlapping frequency band, and the first DL sub-band and the first UL sub-band and/or the second DL sub-band and the second UL sub-band overlap each other.

### First and Second Aspects

In accordance with embodiments of the first and second aspects, the wireless communication system is configured to control the UEs so as to permutate the allocation of the first and second UL sub-bands in a coordinated manner such that the first and second UL sub-bands do not occupy the same frequency band at the same time.

In accordance with embodiments of the first and second aspects, the base station is configured to estimate the channel for at least a part of the DL frequency band after a successful scan of the respective UL sub-band.

This embodiment is advantageous for the following reasons. When the UL and DL sub-bands are not fully overlapped, the base station cannot acquire an estimate of the channel in the DL band, due to the partial UL band occupation. Contrary thereto, in accordance with this embodiment and when assuming that the DL and UL channels are reciprocal, the permutating of the allocation of UL sub-bands facilitates scanning at least the used regions of the UL band which allows the BS to estimate at least a part of the DL band after the scan of the UL band is completed.

In accordance with embodiments of the first and second aspects, wherein the first UL sub-band and the second UL sub-band are offset from each other by a free sub-band, and wherein the first and second UEs are configured to receive from the base station in the free sub-band.

In accordance with embodiments of the first and second aspects, the first UL sub-band and the second UL sub-band overlap each other, and wherein the first and second UEs are configured to receive from the base station in a free subband of the overlapping frequency band.

In accordance with embodiments of the first and second aspects, the first UE comprises a plurality of antennas or an antenna array, the first UE configured to control the antennas or the antenna array so as to set a receive beam pattern and/or a transmit beam pattern of the antenna such that a radiation towards the base station is stronger than a radiation towards the second UE, and/or the second UE comprises a plurality of antennas or an antenna array, the second UE configured to control the antennas or the antenna array so as to set a receive beam pattern and/or a transmit beam pattern of the antenna such that a radiation towards the base station is stronger than a radiation towards the first UE.

Thus, in accordance with this embodiment, at least one of the UEs, i.e., one or the UEs or both UEs, may take advantage of the beamforming capability in order to reduce inter-UE interferences. For example, only some of the UEs in the network may have a null-steering/beamforming inter-UE SIC capability/feature.

In accordance with embodiments of the first and second aspects, the first UE is configured to control the antennas or the antenna array so as to set a receive beam pattern and/or a transmit beam pattern of the antenna such that a null is directed towards the second UE, and/or wherein the second UE is configured to control the antennas or the antenna array so as to set a receive beam pattern and/or a transmit beam pattern of the antenna such that a null is directed towards the first UE.

Thus, in accordance with this embodiment, at least one of the UEs, i.e., one or the UEs or both UEs, may take advantage of the null-steering capability in order to reduce inter-UE interferences.

In accordance with embodiments of the first and second aspects, the base station is configured to receive from the first UE a first interference level caused by the second UE, and/or from the second UE a second interference level caused by the first UE, and control, responsive to the received first and/or second interference levels, the first and/or second UEs to set the receive beam pattern and/or the transmit beam pattern of the antenna accordingly.

For example, in accordance with this embodiment, at least one of the UEs, i.e., one or the UEs or both UEs, may report the interference levels to the base station. In case the first UE reports to the base station the interference level caused by the second UE, the base station may forward the information to second UE to command the second UE to reduce the interference towards the first UE. The same procedure may take place the other way around, however.

In accordance with embodiments of the first and second aspects, the first UL sub-band and the second UL sub-band partially or fully overlap each other.

In accordance with embodiments of the first and second aspects, the base station is configured to provide for
- a full spectral occupancy so as to transmit to the UEs on the entire overlapping frequency band on each of the beams or spatial links or on a sub-set of the beams or spatial links, or
- a partial spectral occupancy so as to transmit to the UEs on one or more DL sub-bands within the overlapping frequency band on each of the beams or spatial links or on a sub-set of the beams or spatial links.

In accordance with embodiments of the first and second aspects, the base station is configured to remove a sub-band from the DL allocated band, the removed sub-band being chosen to avoid any overlap with a UL sub-band.

In accordance with embodiments of the first and second aspects, signal cancellation is implemented at the first UE and/or at the second UE to cancel one or more transmission signals at least in presence of one or more concurrent receive signals from the base station in the overlapping frequency band, and

In accordance with embodiments of the first and second aspects, the UEs are configured to report to the base station the partial SIC capability, and the base station is configured to unallocate a sub-band from the DL band where the UL sub-band is allocated.

In accordance with embodiments of the first and second aspects, the DL frequency subbands are separated by a frequency guard band, and wherein the UL frequency subbands are separated by a frequency guard band.

### Third Aspect

In accordance with embodiments of the third aspect, the time resources used by the first UE and the second UE for a transmission to and a reception from the base station include one or more time slots.

In accordance with embodiments of the third aspect, no signal cancellation is implemented at the first UE and at the second UE to cancel one or more transmission signals at least in presence of one or more concurrent receive signals from the base station in the TDD frequency band.

In accordance with embodiments of the third aspect, the first UE comprises a plurality of antennas or an antenna array, the first UE configured to control the antennas or the antenna array so as to set a receive beam pattern and/or a transmit beam pattern of the antenna such that a radiation towards the base station is stronger than a radiation towards the second UE, and/or the second UE comprises a plurality of antennas or an antenna array, the second UE configured to control the antennas or the antenna array so as to set a receive beam pattern and/or a transmit beam pattern of the antenna such that a radiation towards the base station is stronger than a radiation towards the first UE.

Thus, in accordance with this embodiment, at least one of the UEs, i.e., one or the UEs or both UEs, may take advantage of the beamforming capability in order to reduce inter-UE interferences. For example, only some of the UEs in the network may have a null-steering/beamforming inter-UE SIC capability/feature.

In accordance with embodiments of the third aspect, the first UE is configured to control the antennas or the antenna array so as to set a receive beam pattern and/or a transmit beam pattern of the antenna such that a null is directed towards the second UE, and/or wherein the second UE is configured to control the antennas or the antenna array so as to set a receive beam pattern and/or a transmit beam pattern of the antenna such that a null is directed towards the first UE.

Thus, in accordance with this embodiment, at least one of the UEs, i.e., one or the UEs or both UEs, may take advantage of the null-steering capability in order to reduce inter-UE interferences.

In accordance with embodiments of the third aspect, the first and second UEs are configured to
- estimate an inter-UE-interference channel between the first and second UEs, e.g., through listening to an interference signal, like pilots in the inter-UE-interference channel, and
- exchange information about the estimated inter-UE-interference channel,
the first and second UEs may be configured to communicate with each other using a direct communication channel, like a sidelink channel, and the information about the estimated inter-UE-interference channel is communicated or transferred via the direct communication channel and/or via the base station.

In accordance with embodiments of the third aspect, the first and second UEs are configured to trigger an inter-UE-interference channel estimation updating procedure responsive to a change of an inter-UE interference level exceeding a threshold.

In accordance with embodiments of the third aspect, the base station is configured to allocate the same resources to the first and second UEs in case an inter-UE-interference level between the first UE and the second UE is below a threshold.

In accordance with embodiments of the third aspect, the first and second UEs are located at a distance, wherein the distance
- is a distance at which the inter-UE-interference level between the first UE and the second UE is below a threshold, and/or
- is a distance at which a pathloss between the UEs is above a threshold, and/or
- is a long haul among the UEs, which assures that each UE's UL time slot attenuates enough, e.g., due to the wireless channel pathloss, before the UE's UL time slot reaches the other UE and interferes with the other UE's DL time slot.

In accordance with embodiments of the third aspect, for receiving from the base station, the first and second UEs are configured to receive
- in alternating, non-overlapping first and second DL time slots, and/or
- in a plurality of consecutive first and second DL time slots separated by one or more time slots, wherein the plurality of consecutive first and second DL time slots may overlap or not, and
   for transmitting to the base station, the first and second UEs are configured to transmit
- in alternating, non-overlapping first and second UL time slots, or
- in non-overlapping first and second UL time slots separated by two or more time slots.

In accordance with embodiments of the third aspect, at least one further UE served by the base station using the first beam or spatial link, for receiving from the base station, the first UE and the further UE are configured to receive on different first DL time slots, and for transmitting to the base station, the first UE is configured to transmit to the base station using a first UL time slot, and the further UE is configured to transmit to the base station using a second UL time slot, wherein the DL and UL time slots do not overlap.

In accordance with embodiments of the third aspect, the base station is configured to implement receive beamforming to discriminate the UEs' UL.

### Fourth Aspect

In accordance with embodiments of the fourth aspect, the first UE is configured to control the antennas or the antenna array so as to set a receive beam pattern and/or a transmit beam pattern of the antenna such that a null is directed towards the second UE, and/or wherein the second UE is configured to control the antennas or the antenna array so as to set a receive beam pattern and/or a transmit beam pattern of the antenna such that a null is directed towards the first UE.

In accordance with embodiments of the fourth aspect, the first and second UEs are configured to
- estimate an inter-UE-interference channel between the first and second UEs, e.g., through listening to an interference signal, like pilots in the inter-UE-interference channel,
- exchange information about the estimated inter-UE-interference channel, and
the first and second UEs may be configured to communicate with each other using a direct communication channel, like a sidelink channel, and the information about the estimated inter-UE-interference channel is communicated or transferred via the direct communication channel and/or via the base station.

In accordance with embodiments of the fourth aspect, the first and second UEs are configured to trigger an inter-UE-interference channel estimation updating procedure responsive to a change of an inter-UE interference level exceeding a threshold.

### Third and Fourth Aspects

In accordance with embodiments of the third and fourth aspects, the base station is configured to discriminate an UL transmission from the first UE and an UL transmission from the further UE on the spatial properties of the respective UL transmissions.

In accordance with embodiments of the third and fourth aspects, the DL time slots are separated by a time-domain guard interval, and wherein the UL time slots are separated by a time-domain guard interval.

### First, Second, Third and Fourth Aspects

In accordance with embodiments of any one of the first, second, third and fourth aspects, the wireless communication system includes
a terrestrial network, or
a non-terrestrial network, or
networks or segments of networks using as a receiver an airborne vehicle or a spaceborne vehicle, or
a combination thereof.

In accordance with embodiments of any one of the first, second, third and fourth aspects,
the UE comprises one or more of:
   a mobile or stationary terminal,
   an IoT device,
   a ground based vehicle,
   an aerial vehicle,
   a drone,
   a building, or
   any other item or device provided with network connectivity enabling the item/device to communicate using the wireless communication system, like a sensor or actuator, and
the base station comprises one or more:
   a macro cell base station, or
   a small cell base station, or
   a spaceborne vehicle, like a satellite or a space, or
   an airborne vehicle, like a unmanned aircraft system (UAS), e.g., a tethered UAS, a lighter than air UAS (LTA), a heavier than air UAS (HTA) and a high altitude UAS platforms (HAPs), or
   any transmission/reception point (TRP) enabling an item or a device provided with network connectivity to communicate using the wireless communication system.

In accordance with embodiments of any one of the first, second, third and fourth aspects, the wireless communication system uses an Inverse Fast Fourier Transform, IFFT, based signal, wherein the IFFT based signal includes OFDM with CP, DFT-s-OFDM with CP, IFFT-based waveforms without CP, f-OFDM, FBMC, GFDM or UFMC.

### Methods

In accordance with the first aspect the present invention provides , a wireless communication method for a wireless communication system having a plurality of UEs, the plurality of UEs including at least a first UE and a second UE, and at least one base station, the base station configured to serve the plurality of UEs, the method comprising:
- providing, by the base station, a plurality of beams or spatial links for a wireless communication with the plurality of UEs, the plurality of beams including at least a first beam or spatial link for a wireless communication with the first UE and a second beam or spatial link for a wireless communication with the second UE,
- transmitting, by the base station, to the first UE on the first beam or spatial link using frequency resources within a DL frequency band,
- transmitting, by the base station, to the second UE on the second beam or spatial link using frequency resources within the DL frequency band, wherein the DL frequency band and a UL frequency band overlap at least partially, the overlapping parts of the DL frequency band and the UL frequency band defining an overlapping frequency band,
- concurrently transmitting and receiving, by the base station, in the overlapping frequency band, wherein one or more transmission signals are canceled by the base station at least in presence of one or more concurrent receive signals from the first UE or from the second UE in the overlapping frequency band, and
- transmitting to and receiving from the base station, by the first and second UEs, using respective frequency resources in the overlapping frequency band.

In accordance with the second aspect the present invention provides a wireless communication method for a wireless communication system having a plurality of UEs, the plurality of UEs including at least a first UE and a second UE, and at least one base station, the base station configured to serve the plurality of UEs, the method comprising:
- transmitting, by the base station, to the first UE using a first DL subband of the DL frequency band,
- transmitting, by the base station, to the second UE using a second DL subband of the DL frequency band, wherein the DL frequency band and a UL frequency band overlap at least partially, the overlapping parts of the DL frequency band and the UL frequency band defining an overlapping frequency band,
- concurrently transmitting and receiving, by the base station, in the overlapping frequency band, wherein one or more transmission signals are canceled by the base station at least in presence of one or more concurrent receive signals from the first UE or from the second UE in the overlapping frequency band,
- transmitting, by the first and second UEs, to the base station using respective subbands in the overlapping frequency band,
- transmitting, by the first UE, to the base station using a first UL subband in the overlapping frequency band, the first UL subband selected such a signal in the first DL subband is successfully received by the first UE, and
- transmitting, by the second UE, to the base station using a second UL subband in the overlapping frequency band, the second UL subband selected such a signal in a second DL subband is successfully received by the second UE.

In accordance with the third aspect the present invention provides a wireless communication method for a wireless communication system having a plurality of UEs, the plurality of UEs including at least a first UE and a second UE, and at least one base station, the base station configured to serve the plurality of UEs, the first UE and the second UE transmitting to and receiving from the base station using time resources within a TDD frequency band, the method comprising:
- providing, by the base station, a plurality of beams or spatial links for a wireless communication with the plurality of UEs, the plurality of beams including at least a first beam or spatial link for a wireless communication with the first UE and a second beam or spatial link for a wireless communication with the second UE,
- transmitting, by the base station, to the first UE on the first beam or spatial link using one or more first DL time resources in the TDD frequency band,
- transmitting, by the base station, to the second UE on the second beam or spatial link using one or more second DL time resources in the TDD frequency band,
- concurrently transmitting and receiving, by the base station, in the overlapping frequency band, wherein one or more transmission signals are canceled by the base station at least in presence of one or more concurrent receive signals from the first UE or from the second UE in the overlapping frequency band,
- transmitting, by the first UE, to the base station using one or more first UL time resources in the TDD frequency band, a first UL time resource overlapping at least partially a second DL time resource in the TDD frequency band, and
- transmitting, by the second UE, transmit to the base station using one or more second UL time resources in the overlapping frequency band, a second UL time resource overlapping at least partially a first DL time resource in the TDD frequency band.

In accordance with the fourth aspect the present invention provides a wireless communication method for a wireless communication system having a plurality of UEs, the plurality of UEs including at least a first UE and a second UE, and at least one base station, the base station configured to serve the plurality of UEs, the first UE and the second UE transmitting to and receiving from the base station using a TDD frequency band, the method comprising:
- transmitting, by the base station, to the first UE using one or more first DL time slots in the TDD frequency band,
- transmitting, by the base station, to the second UE using one or more second DL time slots in the TDD frequency band,
- concurrently transmitting and receiving, by the base station, in the overlapping frequency band, wherein one or more transmission signals are canceled by the base station at least in presence of one or more concurrent receive signals from the first UE or from the second UE in the overlapping frequency band,
- transmitting, by the first UE, to the base station using one or more first UL time slots in the TDD frequency band, a first UL time slot overlapping at least partially a second time slot in the TDD frequency band,
- transmitting, by the second UE, to the base station using one or more second UL time slots in the overlapping frequency band, a second UL time slot overlapping at least partially a first time slot in the DL frequency band, and
- controlling antennas or an antenna array of the first UE so as to set a receive beam pattern and/or a transmit beam pattern of the antenna such that a radiation towards the base station is stronger than a radiation towards the second UE, and/or controlling antennas or an antenna array of the second UE so as to set a receive beam pattern and/or a transmit beam pattern of the antenna such that a radiation towards the base station is stronger than a radiation towards the first UE.

### Computer Program Product

The present invention provides a computer program product comprising instructions which, when the program is executed by a computer, cause the computer to carry out the one or more methods of in accordance with the present invention.

Now embodiments and specific implementations of the first to fourth aspects of the inventive approach will be described in more detail. It is noted that the subsequently describes embodiments may be applied or combined, unless being mutually exclusive, for each of the above mentioned first to fourth aspects of the present invention.

### (1) Flexible Frequency-Division Multiple Access

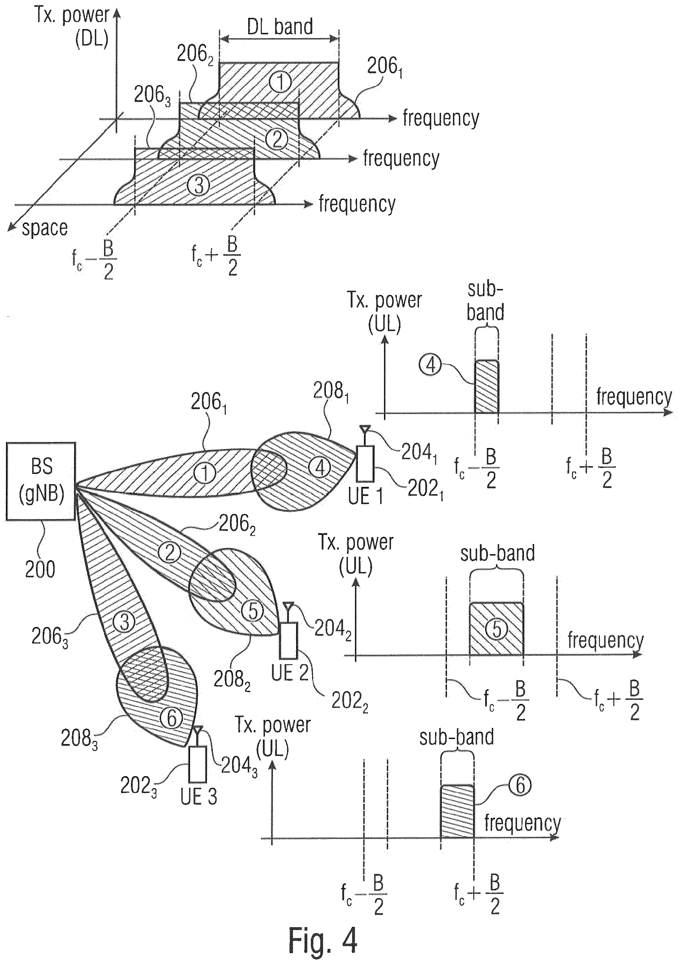

Fig. 4 illustrates an embodiment of the inventive duplexing scheme in a scenario implementing a point-to-multipoint shared-access full-duplex wireless duplexing scheme associated with a spatial diversity, with a partial overlap between the downlink, DL, and uplink, UL, frequency bands.

In the embodiment of Fig. 4, the base station 200 serves three UEs 202₁ to 202₃, i.e., a point-to-multipoint communication is implemented. The base station 200, using the antennas or the antenna array, generates three beams or spatial links 206₁ to 206₃ directed to the respective UEs 202₁, 202₂, 203₃. The diagram in the upper left-hand part of Fig. 4 illustrates the frequency band and the transmission power of the base station 200 upon transmitting to the UEs 202₁ to 202₃ on the respective spatial links 206₁ to 206₃. The base station 200 employs for each of the different spatial links 206₁ to 206₃ the same frequency band indicated for each link by ①, ② and ③, respectively. The frequency band has a bandwidth B around a center frequency f_{c} so that the frequency band or the DL band for the downlink communication, i.e., for transmitting from the base station 200 to the UEs 202₁ to 202₃, is from f_{c} - B/2 to f_{c} + B/2. On each of the spatial links 206₁ to 206₃, the base station 200 transmits in the downlink with the same power level within the frequency band. However, in accordance with other embodiments the base station may transmit at different frequencies using different power levels. Also, different power levels may be employed for the respective beams.

Each of the beams 206, to 206₃ is directed to the respective UE and, on the right-hand part of Fig. 4, for each UE, the frequency band or frequency sub-band used by the respective UE for transmitting to the base station, i.e., for an uplink communication with the base station 200, is depicted. The respective UEs 202₁ to 202₃ transmit to the base station 200 using respective antennas 204, to 204₃ which generate respective transmit beams 208₁ to 208₃ for transmitting to the base station 200 on the respective sub-bands ④, ⑤ and ⑥, respectively. UE 202, employs a sub-band ④ at the lower end of the frequency band used by the base station 200, UE 202₂ employs sub-band ⑤ which is located around the center frequency f_{c} of the frequency band used by the base station 200, and UE 202₃ employs a sub-band ⑥ at the upper end of the frequency band for transmitting to the base station 200. The respective UEs 202₁ to 202₃ share the DL band used by the base station 200 for transmitting to and receiving from the UEs in such a way that the sub-bands on which the UEs transmit to the base station in the uplink do not overlap.

Thus, Fig. 4 shows an embodiment for a space-frequency resource allocation on a network including the base station 200 and three UEs 202₁ to 202₃ using three bidirectional communication links 206₁/208₁-206₃/208₃ between the base station 200 and the UEs. The downlink spectral bands ① to ③ on each link are fully occupied, for example to realize high speed links to the respective UEs, whereas the uplink spectral bands ④ to ⑥ are partially occupied by different UEs, i.e., each UE occupies a sub-band from the overall band. In accordance with embodiments, a frequency division multiplexing, FDM, scheme may be adopted among the uplink paths of the respective UEs so as to reduce the SIC requirements at the UE side and to avoid significant inter-UE interference within the coverage area of the base station 200.

### UL Spectrum Allocation

In the following, embodiments for an UL spectrum allocation at the UE side will be described in more detail.

In accordance with the first embodiment, a partial UL allocation is implemented, namely a partial overlap with the DL band. This embodiment is preferred for UEs 202₁ to 202₃ having limited energy resources, like mobile UEs equipped with a battery. For such UEs only limited energy is available for the SIC. In addition, a SIC channel may change rapidly due to the mobility conditions and/or a human interaction, like the position where the mobile UE is located, e.g., in the hand or at the head of a user. In other words, the UEs 202₁ to 202₃ may have limited or no SIC capabilities so that, in accordance with this embodiment, the UL bandwidth at the UE may be scheduled by the base station 200 in a flexible way dependent on the actual uplink throughput requirements of the respective UE, the SIC capability of the UE and/or the UL bandwidth occupied by one or more neighboring UEs. The maximum allowed UL bandwidth may be controlled and signaled to a UE by the base station base station 200, which may distribute the resources based on UEs demand and their availabilities. In the embodiment of Fig. 4, the three UEs use the same frequency band, however, not the entire band but respective sub-bands ④ to ⑥ are scheduled or allocated by the base station 200 to the respective UEs dependent on the above mentioned demands so as to be non-overlapping. For example, the demand of UE 202, may be the smallest so that the sub-band ④ has the smallest bandwidth, whereas the UE 202₂ has the highest throughput demand on the uplink towards the base station so that the sub-band ⑤ has the largest bandwidth.

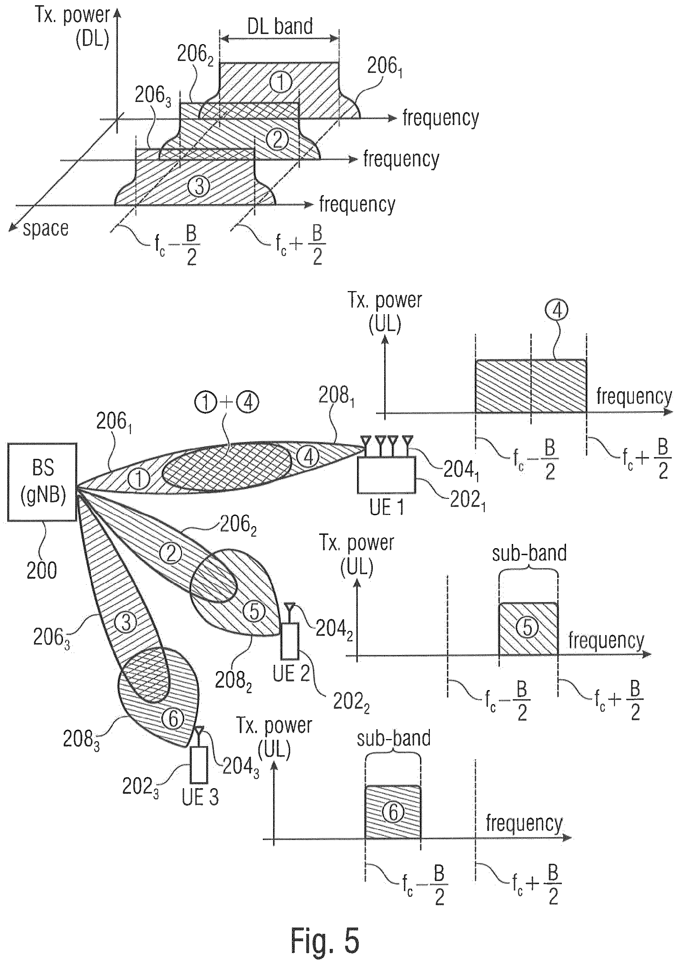

In accordance with a further embodiment a full UL band allocation may be implemented, i.e., a complete overlap with the DL band. Fig. 5 illustrates a wireless communication system in accordance with an embodiment implementing a full UL band allocation. Fig. 5 is a wireless communication system similar to Fig. 4 so that only those parts differing from Fig. 4 will be described in more detail below.

The UEs 202₁ and 202₃ may be similar those in Fig. 4, however, the first UE 202₁ may provide for advanced capabilities. For example the UE 202, may include an antenna array 204₁ or a plurality of antennas 204₁ which allow for the transmit beam 208, to be formed as a narrow or pencil beam. i.e., a beam substantially narrower than the beams 208₂ and 208₃. The UE 202₁ is scheduled by the base station 200 such that the uplink band ④ spans the entire frequency band used by the base station 200, i.e., fully overlaps the DL band. The embodiment of Fig. 5 may be implemented for UEs having an increased demand for bandwidth and/or throughput and/or in scenarios where a symmetrical traffic for the uplink and for the downlink is required. UE 202, is capable to suppress the self-interference, SI, over the entire bandwidth and may form the pencil beam 208, so as to avoid an interference with other UEs, like the neighboring UEs 202₁ and 202₃ that are served by the base station 200 or that occupy the same frequency band. In the embodiment of Fig. 5 it is assumed that, while that the first UE 202, occupies for the uplink the entire frequency band, the other UEs 202₂ and 202₃ only use sub-bands ⑤ and ⑥ in a similar way as described with reference to Fig. 4, except that in Fig. 5 UE 202₂ uses the upper half of the frequency band and UE 202₃ uses the lower half of the frequency band.

In accordance with embodiments, the first UE 202₁ may be a UE having a fixed wireless access so that the SI channel does not change rapidly, and a quasi-stationary SI channel may be assumed. This allows an efficient SIC over a broad spectral band. In addition, UE 202, may have access to a permanent power source so as to be in a position to invest sufficient energy for the SIC.

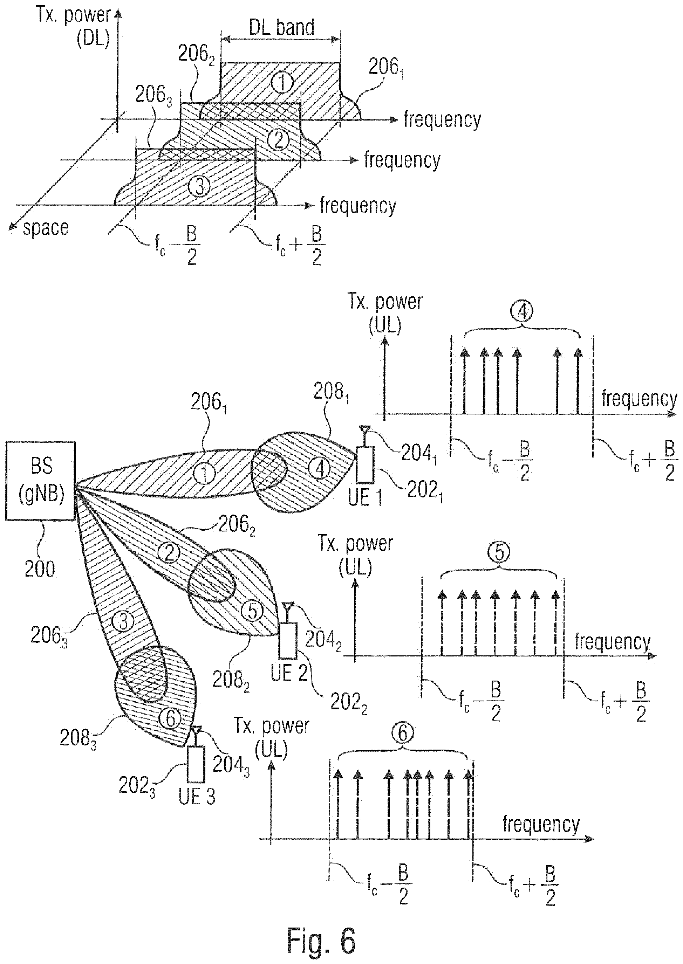

In accordance with yet other embodiments, a UL distributed subcarrier allocation may be implemented. Fig. 6 illustrates an embodiment of the inventive approach employing a UL distributed subcarrier allocation adopting a sub-carrier based UL-FDM scheme for sharing the bandwidth available for the UL among the UEs. When compared to Fig. 4, the difference to the embodiment of Fig. 6 is that rather than scheduling each of the UEs 202₁ to 202₃ with a number of consecutive frequency carriers, thereby forming a frequency sub-band, in accordance with the embodiment of Fig. 6, each UE 202₁ to 202₃ has allocated respective distinct subcarriers with the same or different spacing between the neighboring subcarriers. Thus, in accordance with this embodiment, the resource sharing among the UEs 202₁ to 202₃ is based on a distribution of the respective frequency subcarriers and each UE has its own set ④ to ⑥ of subcarriers, wherein the respective sets ④ to ⑥ of subcarriers do not overlap with each other. In accordance with embodiments, an OFDMA scheme may be adopted among the respective uplink subcarrier sets of the different UEs.

In accordance with further embodiments, the base station 200 may rely on the channel reciprocity so as to provide a channel estimation for the reciprocal DL channel and, on the basis of the distributed subcarriers, the base station may obtain an interpolated channel estimation of the entire band.

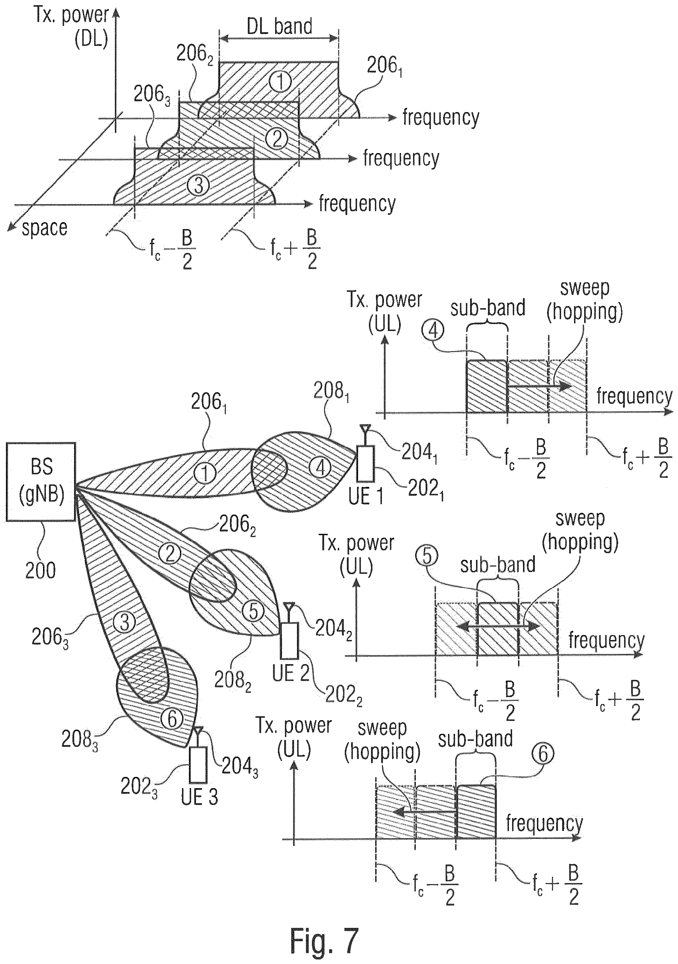

In accordance with yet another embodiment, a UL sub-band hopping allocation may be implemented. Fig. 7 illustrates an embodiment of a duplexing scheme implementing the UL sub-band hopping allocation, like a sweeping or rotating allocation scheme. In Fig. 7, a similar wireless communication system as in Fig. 4 is depicted, however, other than in Fig. 4, the sub-bands ④, ⑤, ⑥ may rotate in a coordinated manner in such a way that they do not overlap each other at the same time. For example, the sub-band ④ is used by UE 202₁ for transmitting to the base station 200 at the lower end of the frequency band and may be rotated or relocated in a coordinated manner, for example, under control of the base station, such that at another time the sub-band ④ occupies a central area of the frequency band and at yet another time it is located at the upper end of the frequency band as is schematically indicated by the arrow in the diagram representing the sub-band positions for the first UE 202₁. When changing the position of the sub-band ④, at the same time, the respective position of the other sub-bands ⑤ and ⑥ may need to be adapted accordingly. For example, when assuming that sub-band ⑤ is initially located at the center of the frequency band and sub-band ⑥ is located at the upper end of the frequency band, sweeping the sub-band ④ towards the central area of the frequency band requires at least a hopping of the sub-band ⑤ to a different position. For example, when hopping to the lower end of the frequency band no further hopping or modification of the sub-band ⑥ is needed, however, when moving sub-band ⑤ to the upper end of the frequency band in response to moving sub-band ④ to the center of the frequency band, also sub-band ⑥ needs to be changed and, in this example, it needs to be located from the initial position at the upper end to a new position at the lower end of the frequency band. Naturally, the same applies when the sub-band hopping starts with either one of sub-bands ⑤ and ⑥.

The embodiment of Fig. 7 allows each of the UEs to acquire channel knowledge about the entire UL band which completely overlaps with the DL band as used by the base station 200 after a complete rotation. In case of channel reciprocity this information may be used as channel knowledge information for the downlink channel. In accordance with embodiments implementing M-MIMO, this technique may be used to obtain the DL channel information from the UL hopping based channel estimation procedure.

With regard to the embodiments described with reference to Fig. 4 to Fig. 7, it is noted that these embodiments may be implemented in the wireless communication system separately or in combination. For example, the embodiments of Fig. 4 and Fig. 5 may be combined so that one or more of the UEs having the respective capabilities as explained with reference to Fig. 5 may have access over the entire UL band. In other words, a subset of the UEs accesses the base station using the entire UL band while the remaining UEs share the band in accordance with the FDM scheme explained with reference to Fig. 4. Actually Fig. 5 shows such a combination of the embodiments implementing a full UL band allocation for UE 202, and a partial UL band allocation for UEs 202₂ and 202₃.

In accordance with other embodiments, the embodiments implementing UL distributed subcarrier allocation and UL sub-band hopping allocation may be combined to implement a subcarrier hopping and to acquire an estimation of the channel over the entire band instead of using an interpolated estimation.

### UL Sub-band Reusing by Implementing Rx Sectorization Functionality at the Base Station

In accordance with embodiments one or more of the UL bands, like the UL sub-bands described above with reference to Fig. 4 to Fig. 7, may be reused when implementing at the base station a sectorization functionality with regard to the reception of signals from the respective UEs.

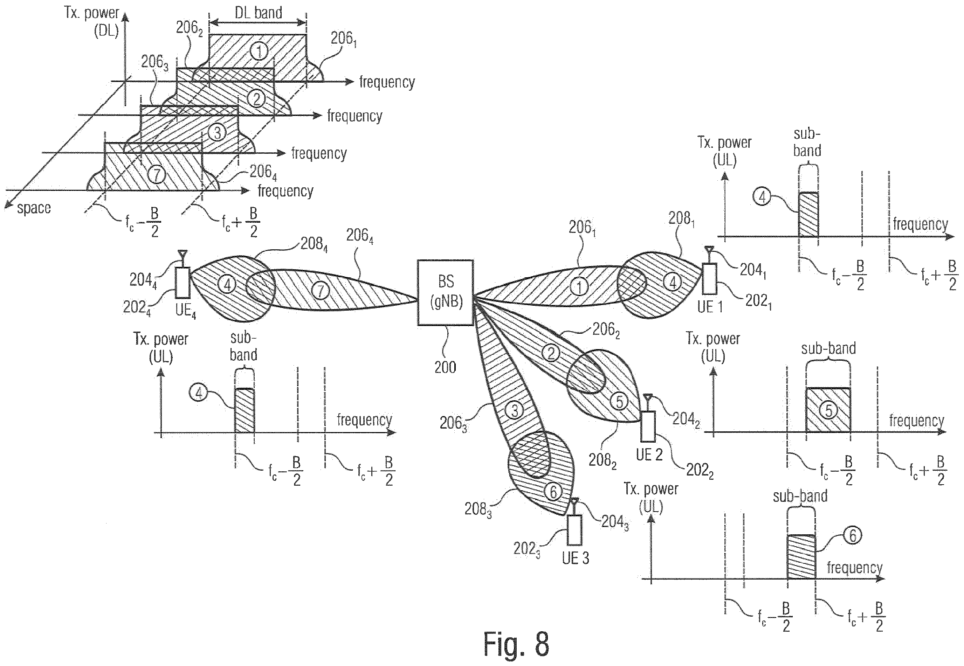

Fig. 8 illustrates an embodiment of the inventive UL sub-band reusing scheme. When compared to Fig. 4 to Fig. 7, the wireless communication system includes a fourth UE 204₄ and the base station 200 generates a fourth spatial link or beam 206₄ using the same frequency band as on the other beams 206, to 206₃. The first to third UEs 202₁-202₃ may operate in a way as explained above with reference to Fig. 4, however, also any other kind of operation as described in the embodiments of Fig. 5 to Fig. 7 may be implemented. The fourth UE 202₄ is located at a position within the coverage area of the base station 200 that is at a distance from the first UE 202₁ so that, due to the distance between UE 202, and UE 202₄, the interference level between the two UEs 202₁, 202₄ is low, i.e., is below a predefined threshold, or there is no interference between the two UEs 202₁, 202₄ at all. For such UEs the sub-bands may be reused for the uplink multiple times. In the embodiment of Fig. 8, UE 202₄ uses the same sub-band ④ as the first UE 202, for the uplink or transmission to the base station 200 which is possible because the first and fourth UEs 202₁, 202₄ are distanced from each other sufficiently so that there is no, or a sufficiently low interference level among them.

The embodiment of Fig. 8 is advantageous as it causes another fold in the resource utilization measures by implementing the UE UL sub-band reusing scheme. In accordance with this embodiment, the base station 200 is capable to discriminate the multi UL links 206₁, 206₄ which have allocated thereto the same sub-band ④ based on the spatial properties, for example dependent on an angle of arrival or angle of departure of the respective beams 206₁, 206₄ to the UEs 202₁, 202₄ and the respective beams 208₁, 208₄ from the UEs 202₁, 202₄. In other words, the base station 200 may implement a receive sectorization functionality, for example, by using a multi-antenna configuration such as MU-MIMO so as to split the overlapped UL links originating from the different UEs 202₁, 202₄.

In accordance with embodiments, the Rx sectorization functionality may be activated at the base station 200 only at times at which the respective overlapping sub-bands are active. For example, in situations where both the first UE 202, and the fourth UE 202₄ transmit towards the base station 200 using the sub-band ④, the sectorization functionality may be activated at the base station 200, however, in case either one of the UEs 202₁, 202₄ does not transmit towards the base station, the sectorization functionality may be disabled.

### Boosting of UL Sub-band Reusing Scheme by Means of UE Null-steering Capability

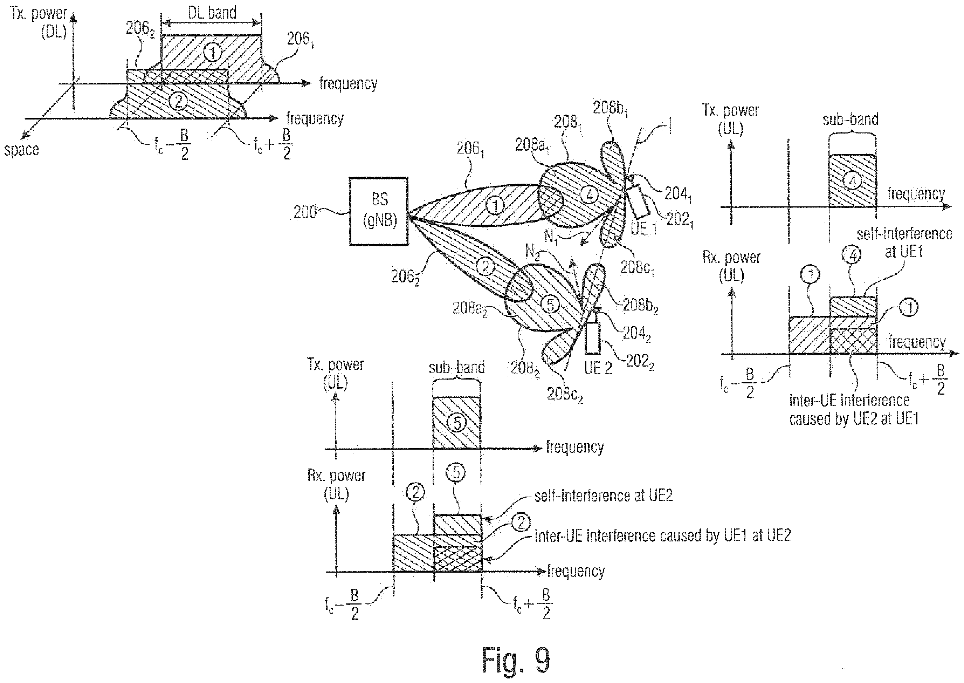

In accordance with yet further embodiments, the UL sub-band reusing scheme may be further improved or boosted by implementing a null-steering at the UEs. Prior to describing this embodiment in more detail, the inter-UE interference caused due to the reuse of the same UL sub-band at two neighboring UEs will be described with reference to Fig. 9.

Fig. 9 shows a wireless communication system similar to Fig. 4, however, only two UEs 202₁ and 202₂ are shown for discussing the inter-UE interference caused among UE 202, and UE 202₂. Further, the transmit beams 208, and 208₂ of the respective UEs are shown in more detail. The respective transmit beams from the UEs include respective main lobes 208a₁, 208a₂, which are directed towards the base station 200, and respective side-lobes 208b,, 208c, and 208b₂, 208c₂. The transmit beams or patterns 208₁, 208₂ of the UEs 202₁, 202₂ may be such that there are side lobes 208c₁ and 208b₂ facing each other. In other words, for each UE there is a side-lob that is directed towards the other or victim UE, which experiences interference from the UE in case of overlapping UL sub-bands. In Fig. 9 it is assumed that both UE 202, and UE 202₂, for transmitting to the base station 200, use the sub-bands ④, ⑤ which overlap and are at the upper end of the frequency band used by the base station 200. Thus, when both UEs are transmitting to the base station 200, interference will occur at the respective UEs in the sub-band. The interference has a first part which is due to the self-interference at the respective UE and a second part due to the inter-UE interference caused from the other UE because a part of the signal is transmitted via the side lobes mentioned above.

Thus, in Fig. 9, despite the fact that the base station 200 is in a position to discriminate the transmissions from the UEs in the same sub-band based on the respective different spatial properties of these transmissions, like different angles of departure or the like, for allowing to reuse sub-bands by UEs the inter-UE interferences are addressed in accordance with embodiments of the present invention.

In accordance with embodiments the sub-band reusing scheme may rely on the long-haul among the UEs, i.e., reusing the same sub-band by the UEs may be allowed in case an interference signal between the two UEs is already sufficiently suppressed before it reaches a potential victim UE, e.g. due to a distance at which the UEs are located from each other so that the path loss will reduce the interference to a predefined level or less.

In accordance with further embodiments, UEs which support beamforming may employ this scheme by restricting a radiation pattern into a direction towards the base station and by providing a narrow beam so that interference levels are also reduced as less signals are emitted towards unwanted directions, where other UEs may be located.

In accordance with yet further embodiments of the present invention, the reusing scheme is further improved and allows even more instances of sub-band reusing when the UE allows for a null-steering on its transmission beam pattern. As explained above with reference to Fig. 9, an interference may be caused by a UE at its neighbor when using the same UL sub-band. In the scenario depicted in Fig. 9, neither the first UE 202₁ nor the second UE 202₂ have positioned a null on its transmission, Tx, and/or reception, Rx, beam pattern so as to be facing in a direction towards each other. In Fig. 9 the respective null positions on the beam patterns of the two UEs are indicated by the arrows N₁, N₂. Actually, the side lobes 208c, and 208b₂ of the beam patterns of the UEs 202₁, 202₂ face each other along the line I so that a significant interference is caused at the other UE, also referred to as the victim UE. Such interference may not allow for implementing the sub-band reusing scheme at the different UEs. Therefore, in accordance with this embodiment, null-steering capabilities, which may be available at the respective UEs, are employed to align the respective nulls on the beam patterns of neighboring UEs. The position of the null may be implemented on the transmission beam, on the reception beam or on both beams. In accordance with embodiments, dependent on the UE hardware implementation, the beam pattern may be configured for reception and transmission independently or a single configuration for both transmission and reception may be implemented.

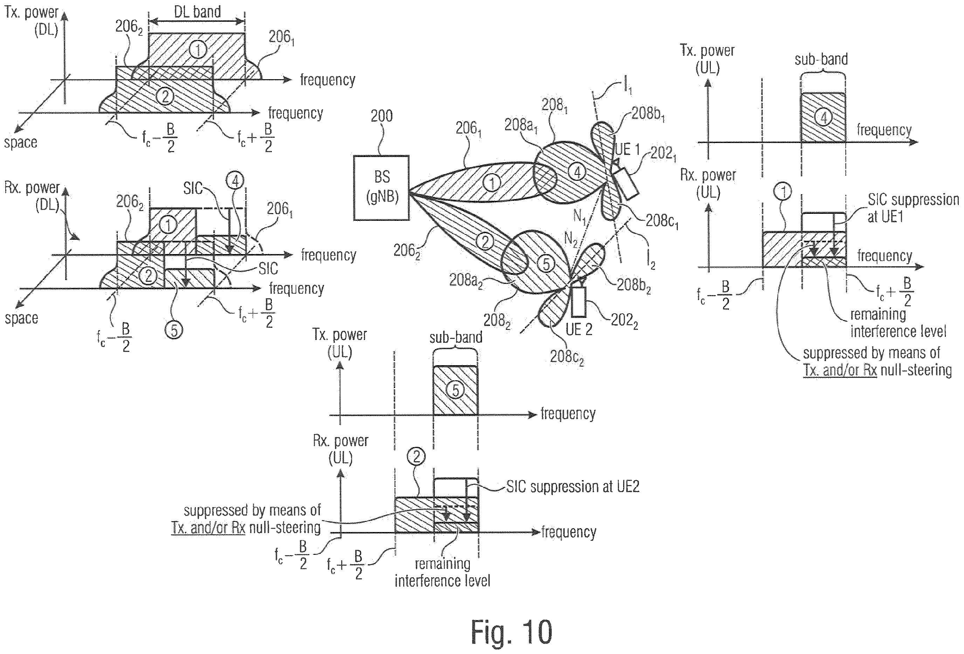

Fig. 10 illustrates an embodiment of the inventive approach in which, in a scenario as depicted in Fig. 9, the UEs 202₁ and 202₂ utilize their null-steering features to allow the reuse scheme of sub-bands in adjacent UEs, thereby allowing for more instances to realize the UL sub-band reusing scheme within the entire network. More specifically, each of the UEs 202₁, 202₂ employed its null-steering capabilities to generate the respective beam patterns 208₁, 208₂ such that the side-lobes 208b₁, 208c₂ of the respective UE beam patterns 208₁, 208₂ do not face each other as is indicated by the lines I1, I2. The null positions N1, N2 have been positioned in the respective beam patterns 208₁, 208₂ to face each other, thereby reducing the inter-UE interference caused by the neighboring UE. In the respective diagrams associated with the first and second UEs 202₁, 202₂ one can see that, when assuming that the respective UEs employ a SIC technique, the self-interference at the respective UEs is substantially reduced and, due to the null-steering in accordance with the present embodiment, also the inter-UE interference caused at the respective UEs is substantially reduced. The respective diagrams show the remaining interference level due to the self-interference and the inter-UE interference to be substantially lower than the inter-UE interference without null steering as shown in Fig. 9.

Fig. 10 also illustrates for the base station 200, in addition to the transmit power on the downlink band on beams 206₁, 206₂, the receive power when receiving from the respective UEs. Due the spatial diversity provided by the base station 200 the signals from the respective UEs can be discriminated. Further, at the base station 200, which employs SIC, the self-interference on the parts of the frequency band which are shared by the UEs for the transmission to the base station 200 can be reduced to a level that is substantially below the level of the power of the signals transmitted from the respective UEs in the sub-bands ④ and ⑤ so that the base station reliably detects these signals on sub-bands ④ and ⑤.

In accordance with embodiments, the UL sub-band reusing scheme may include a coordination from the base station dependent on the feedback from the UEs. For example, the UE may report to the base station an interference level caused by an interfering UE and the base station, responsive to the report, may take counter-measures, for example a different sub-band may be assigned, e.g., to the interfering UE, and/or the base station may control the UEs experiencing interference from each other to align respective nulls in the beam pattern(s) to a correct direction. In accordance with other embodiments, also a partial sub-band reuse scheme may be implemented so as to allow a UE to reuse the sub-band of a neighboring UE, for example when implementing the above described sub-band hopping for only a subset of UEs such a partial reuse scheme may be implemented.

### Insufficient Beam Narrowness and/or Ultra-dense UE Distribution

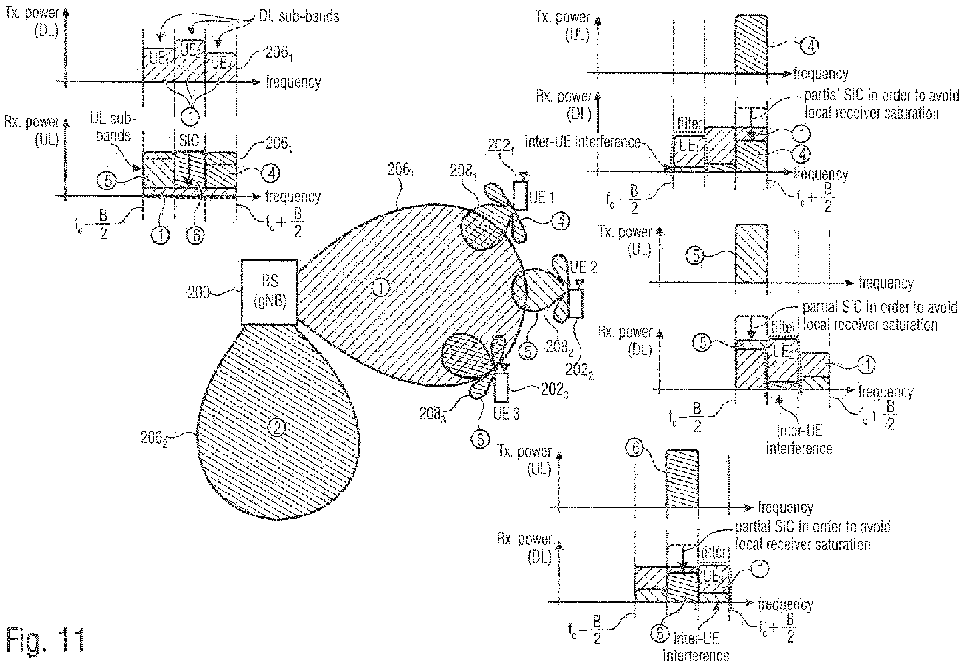

In accordance with further embodiments, two or more UEs may share the bandwidth within a base station sectorial or beam coverage. Fig. 11 illustrates a wireless communication system in accordance with an embodiment in which three UEs 202₁ to 202₃ share the band ① within the same beam 206₁, i.e., within the same sectorial coverage of the base station 200. Each of the UEs 202₁ to 202₃ transmits to the base station 200 using its transmit pattern 208₁ to 208₃ and each UE uses an uplink subband ④, ⑤ and ⑥, respectively, which are different from each other. In the depicted embodiment, UE 202, uses a UL sub-band ④ at the upper end of the frequency bandwidth, UE 202₂ uses a UL sub-band ⑤ at a lower end of the frequency bandwidth, and UE 202₃ uses a sub-band ⑥ at the center of the frequency band. Further, the base station 200, as is depicted in the upper left-hand diagram, transmits data for the respective UEs on the beam 206, in different DL sub-bands. The first sub-band at the lower end of the frequency band includes information for the first UE 202₁, the second DL sub-band at the center of the frequency band includes information for the second UE 202₂, and the third DL sub-band at the upper end of the frequency band includes information for the third UE 202₃. The respective UL sub-bands ④, ⑤ and ⑥ occupy frequencies which are different from the frequencies of the DL sub-bands for transmitting from the base station 200 to the respective UEs.

In a network scenario as depicted in Fig. 11, the base station 200 receives on a single spatial link 206, signals from a plurality of UEs so that the respective UEs may not be discriminated from each other on the basis of the spatial property of the spatial link 206₁. A scenario as in Fig. 11 may occur, for example, in case the base station 200 cannot form narrow enough independent beams for covering the UEs 202₁, 202₃ independently, i.e., using independent spatial links or beams, and/or in case within the coverage area there are some spots at which a plurality of UEs are present which is also referred to as an ultra-dense UE presence. In such scenarios, as they are depicted in Fig. 11 as an example, embodiments of the inventive duplexing scheme enable the base station 200 to serve each UE within its coverage using an adopted resource sharing scheme. Embodiments of the invention provide different sub-band allocation schemes for allowing a sub-band sharing among a plurality of UEs within a sectorial coverage of the base station 200, i.e., a plurality of UEs that are covered by a single spatial link or beam 206₁ as is depicted in Fig. 11.

In accordance with a first embodiment a DL-UL sub-band permutation is implemented in accordance with which the base station 200 allocates or schedules for each UE 202₁ to 202₃ a DL sub-band and a UL sub-band which do not overlap, as has been explained above with reference to Fig. 11. This scheme may be used where an inter-UE interference is below a threshold so that only partial SIC is required at the UE side. More specifically, when considering the respective diagrams in Fig. 11 in more detail, one can see that, for example, UE 202₁ uses a UL sub-band for a sub-band at the upper end of the frequency band and the base station 200 transmits data for the UE 202, in a DL sub-band that is at a lower end of the frequency band. As can be seen from the receive power diagram associated with UE 202₁, a filter may be implemented at the UE 202, for filtering from the downlink frequency band the DL sub-band including the information or data for the UE 202₁. At the UE a partial SIC may be performed so as to avoid a saturation of a local receiver inside the respective UE. Similar processes are implemented for UE 202₂ and UE 202₃ as can be seen from the associated diagrams representing the transmit power in the uplink connection and the receive power in the downlink connection.

At the base station 200 SIC is implemented for receiving at the base station 200 the respective signals in the sub-bands ④, ⑤ and ⑥ when transmitting from the UEs towards the base station 200. More specifically, at the base station 200, by implementing SIC, the transmit power for the downlink communication is reduced so that the signals from the respective UEs can be detected at the base station 200.

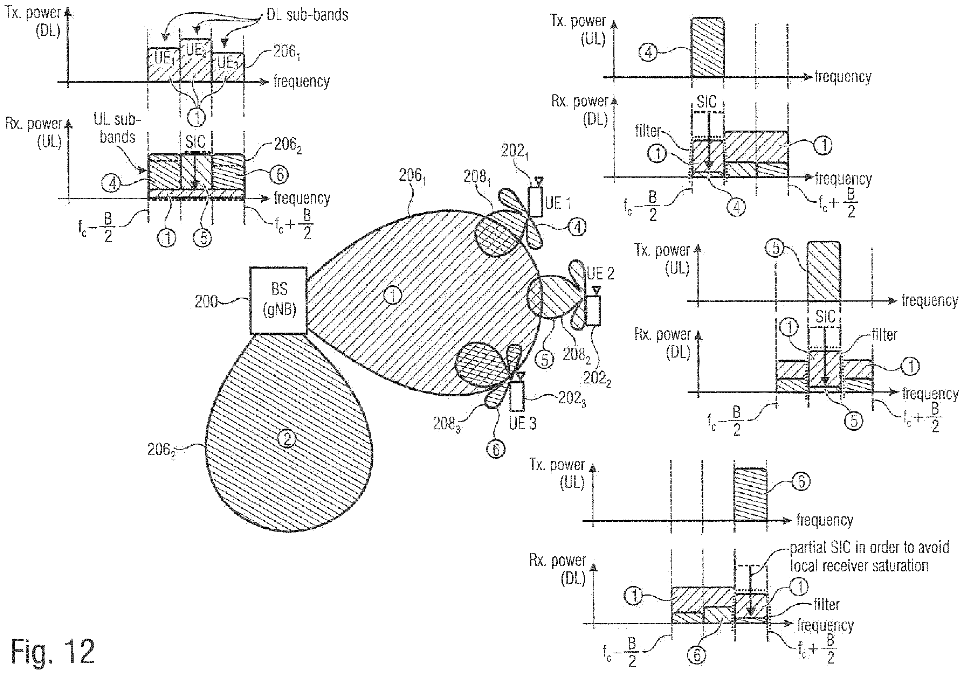

In accordance with other embodiments an overlapped DL-UL sub-band may be implemented. Fig. 12 shows a wireless communication system implementing such an embodiment. Fig. 12 is similar to Fig. 11 except that the respective sub-bands ④, ⑤ and ⑥ used by the UEs 202₁ to 202₃ for transmitting to the base station 200 overlap with the DL-sub-bands in the spectral link 206₁, i.e., the UL sub-bands ④, ⑤, and ⑥ are at the same locations within the frequency bands as the respective downlink sub-bands indicated in the diagram associated with the base station 200 as UE 202₁ sub-band, 202₂ sub-band and UE 202₃ sub-band. Thus, the DL sub-band and the UL sub-band among the base station 200 and each UE 202₁ to 202₃ share exactly the same frequency band, i.e., there is a complete sub-band overlap for the uplink and for the downlink at the UE side. In accordance with this embodiment, the respective UEs 202₁ to 202₃ are implemented to suppress the SI, preferably by applying SIC, as is indicated in the respective diagrams associated with the UEs so that in the downlink-band, due to the SIC, the signal in the corresponding uplink bands ④, ⑤ and ⑥ is suppressed so that the information in the downlink sub-bands may be received at the respective UEs. Thus, in addition to Fig. 11, in which a filter is implemented for receiving the information on the downlink sub-bands, the UEs, in accordance with the embodiment of Fig. 12, cancel the SIC at the overlapping sub-bands. This embodiment may be implemented in scenarios in which inter-UE inter-levels exceed an acceptable or predefined threshold. In accordance with embodiments, the respective UEs suppress the SI to a predefined level, for example to a level corresponding to the receiver noise floor.

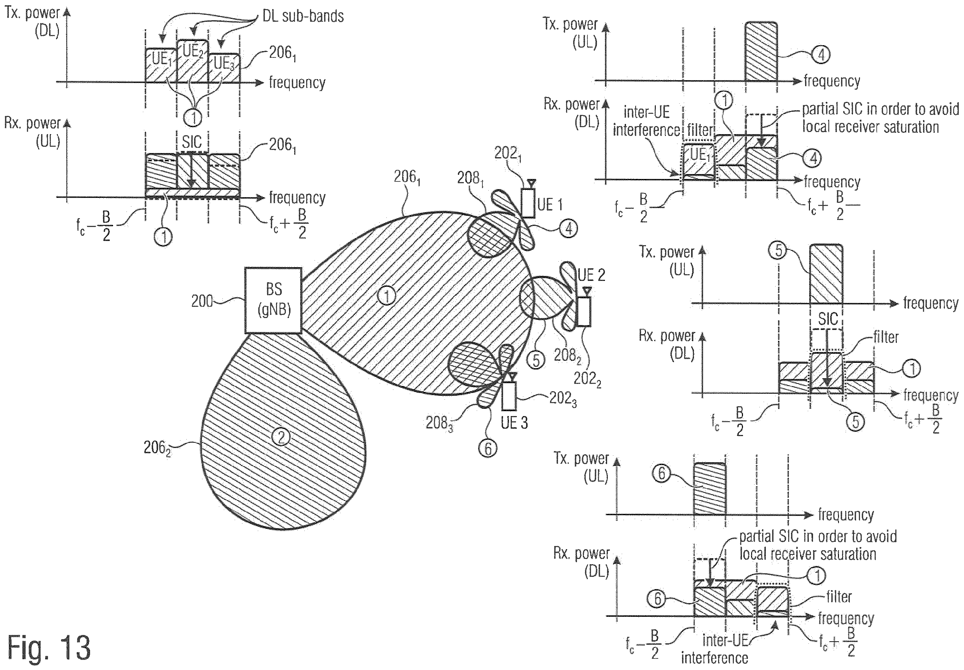

In accordance with yet another embodiment, the embodiments of Fig. 11 and Fig. 12, namely the DL-DL sub-band permutation and the overlap DL-UL sub-band may be combined, which provides a wireless communication network in which some of the UEs adopt the first scheme, the DL-UL sub-band permutation scheme, and others adopt the second scheme, the overlapped DL-UL sub-band scheme, as is schematically depicted in Fig. 13. The selection which of the duplexing schemes is to be implemented may be based on the SIC capabilities of the UEs and/or the inter-UE interference levels at the UEs. Fig. 13 depicts an embodiment in which the first and third UEs 202₁ and 202₃ operate in accordance with the embodiment of Fig. 11 employing the DL-UL sub-band permutation and have their DL and UL sub-bands interchanged, whereas the second UE 202₂ uses the same sub-band for the DL and the UL in accordance with the overlapped DL-UL sub-band embodiment described above with reference to Fig. 12.

The present invention is not limited, with regard to the embodiments of Fig. 11, Fig. 12 and Fig. 13, to a base station providing two or more spatial links 206₁, 206₂. Rather, in accordance with other embodiments, the schemes described with reference to Fig. 11, Fig. 12 and Fig. 13 may equally be applied for base stations not providing for a spatial diversity, e.g., providing only a single radiation pattern, like an omnidirectional radiation pattern, for serving the plurality of UEs within the coverage area of the base station.

### Inter-UE Interference Handling Mechanism

In accordance with embodiments of the present invention, an inter-UE interference handling mechanism for suppressing or even avoiding interference may be implemented.

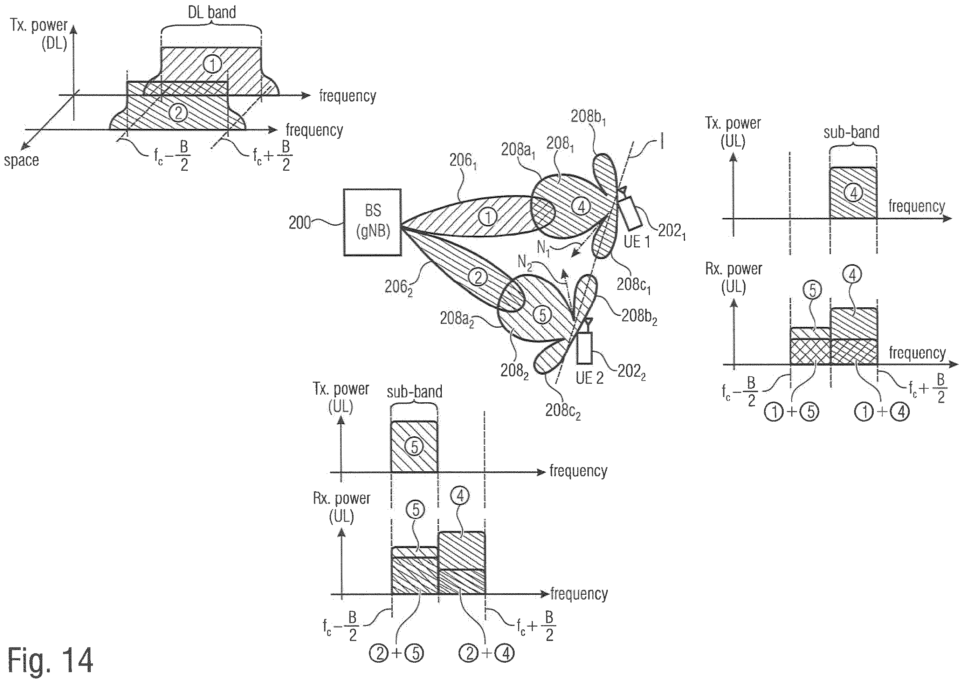

Fig. 14 illustrates a situation in which inter-UE interference denies a UE from receiving a sub-band in the downlink communication. The base station 200 forms two beams or spatial links 206₁, 206₂ for transmitting to the UE 202₁ and the UE 202₂, respectively, using a frequency band as depicted in the upper left-hand part of Fig. 14 defining a downlink band. As is shown at the respective diagrams associated with the UEs, UE 202₁ uses an upper half of the frequency band as a sub-band ④ for transmitting to the base station and the UE 202₂ uses a lower half of the frequency band as sub-band ⑤ for transmitting to the base station 200. Fig. 14 shows the respective transmit patterns 208₁, 208₂ of the respective UEs including the respective main-lobes 208a and the respective side lobes 208b, 208c. The side-lobes 208c, and 208b₂ of the transmit patterns face each other along the line I so that there is an inter-UE interference between the UE 202, and the 202₂. The arrows N₁ and N₂ indicate the null positions in the respective beam patterns 208₁, 208₂ which do not face each other.

In such a situation, when assuming that the two UEs 202₁ and 202₂ do not apply or do not have implemented any SIC technique, the UE 202, will receive from the base station 200 the downlink band ① overlaid in the first half of the frequency band with the uplink band ⑤ of the second UE 202₂ due to the facing side lobes as mentioned above and, in the upper half of the frequency band, a combination of the downlink band ① and the sub-band ④. In a similar way, UE 202₂ receives in the lower half of the frequency band a combination of the sub-band ⑤ and the downlink band ② and in the upper half of the frequency band a combination of the downlink band ② and the sub-band ④ from the first UE due to the interference. In other words, the overlapping sub-bands for the uplink and for the downlink are jammed due to the self-interference at the upper half of the frequency in the first UE and the lower half of the frequency band in the second UE because no SIC is implemented at the UEs. Thus, in case a downlink is active, the frequency band used for the downlink cannot be used simultaneously for the uplink unless an interference among the UEs is handled and/or the SI at the UEs is cancelled.

Thus, in the constellation as shown in Fig. 14 in which the UEs are not equipped with a SIC capability, the full-duplex operation by the base station, having implemented SIC techniques, will only be applicable in case the inter-UE interference is handled. The inter-UE interference is due to the fact that the UL band, which is fully or partially overlapped with the DL band, will not be used by the UEs as the respective UL sub-bands of the UEs disturb or jam the downlink sub-band of the other UE. In the scenario of Fig. 14, the base station 200 may discriminate the UEs 202₁, 202₂ because of the two DL spatial links 206₁, 206₂, however, without inter-UE interference handling, neither of the UEs may receive the dedicated downlink due to:
- the presence of an unhandled active UE uplink which interferes with the downlink of the other UE, and
- because the UE does not include SIC capability.

Thus, the UL allocation of the sub-bands may cause interferences among the UEs, also referred to as inter-UE interferences and despite the fact that, in accordance with embodiments, the UL spectral band is divided or multiplexed among the UEs, the respective uplinks of UEs may still cause an interference at the sub-bands used for the downlink in neighboring UEs.

In the following embodiments will be described which address the inter-UE interferences by reducing the UL sub-band occupancy, or by a multiple overlap sub-band UL allocation, or by a UE null-steering based technique, or by a coordinated UL sub-band allocation based on the distribution of the UEs.

### Reduced UL Sub-Band Occupancy

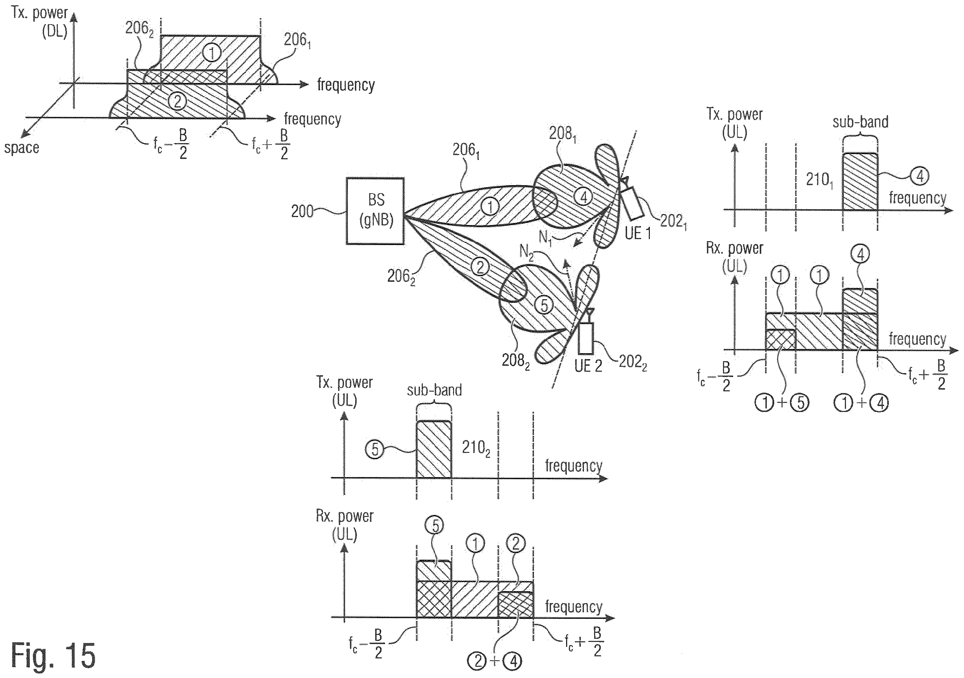

In accordance with an embodiment inter-UE interferences may be reduced or avoided by providing for a reduced UL sub-band occupancy. Fig. 15 shows an embodiment for implementing a reduced UL sub-band occupancy by releasing a DL sub-band to be free of any interferences. More specifically, Fig. 15 shows a scenario basically similar to the one of Fig. 14 except that the sub-bands ④ and ⑤ used by the respective UEs 202₁ and 202₂ for the uplink transmission to the base station 200 are reduced in bandwidth such that there is a free or non-occupied sub-band provided in the uplink frequency band, as is indicated at reference signs 210₁, 210₂. In other words, in accordance with this embodiment, the UL band occupancy by the UEs is reduced so as to release some of the band only for the DL parts, namely the bands or subbands 210₁ and 210₂ which, as can be seen from the diagrams in Fig. 15 associated with the UEs are free of any interferences. In these bands 210₁, 210₂ the respective UEs may receive transmissions from the base station 200 using an uninterrupted DL connectivity to the base station. In other words, by means of the sub-bands 210₁, 210₂, which were achieved by having the UL band occupancy of the respective UEs reduced, the base station 200 may maintain the two downlinks to the respective UEs.

### Multiple Overlap Sub-Bands UL Allocation

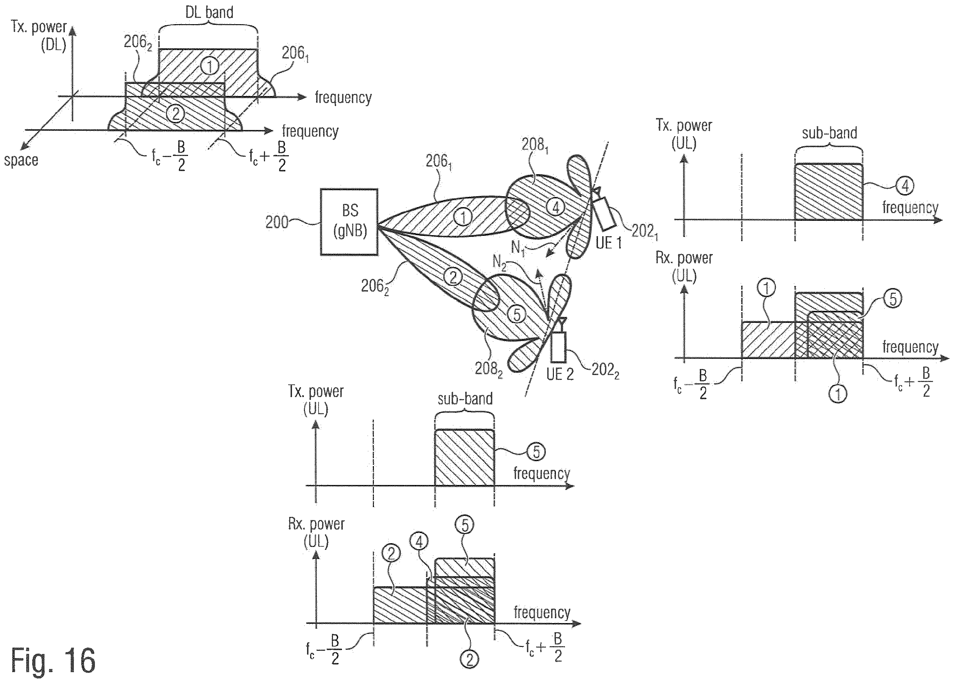

In accordance with another embodiment, a multiple overlap sub-bands UL allocation is implemented. Fig. 16 illustrates this embodiment in more detail in accordance with which the UE UL sub-bands are overlapped so that the remaining parts of the spectrum or the remaining bandwidths of the full frequency band may be used for the downlink parts. In the embodiment of Fig. 16, the base station 200 is assumed to be in a position to discriminate the respective uplink transmissions from the UEs 202₁, 202₂ based on their spatial characteristics so that, for example, based on a detected angle of arrival or angle of departure, the base station 200 can judge whether a transmission originates from UE 202, or UE 202₂ due to the spatial diversity provided by the UE. Further, the UL sub-band ④ of the UE 202, and the UL sub-band ⑤ of the UE 202₂ overlap so that the UE 202, and the UE 202₂ may receive from the base station 200 in the downlink in the other half of the frequency band, i.e., except for the sub-band of the frequency band which is used for the uplinks of the UEs, namely sub-bands ④ and ⑤, the rest of the band is saved or is free for the downlink communication.

### UE Null-Steering

In accordance with yet other embodiments, a UE null-steering technique may be implemented at the respective UEs. For example, in a similar way as described above with reference to Fig. 9 and Fig. 10, UEs capable of steering their antennas are controlled to steer a null towards an interference direction to avoid inter-UE interferences. In accordance with embodiments, this technique is implemented at all UEs involved, for example at both UEs as depicted in Fig. 15 and Fig. 16.

In accordance with embodiments of the present invention, a UE which is subject to interferences from one or more other UEs that are within its band of interest is referred to as the inter-UE-interference-victim UE, and the UE that radiates signals towards a direction, which may not be a necessary direction, like the direction of a side lobe of the pattern, thereby causing interferences at one or more other UEs (victim UEs) is referred to as an inter-UE-interference oppressor UE.

In accordance with the embodiment for implementing a null at a desired position, at the inter-UE-interference-victim UE, an Rx or receiving null-steering is implemented so that the inter-UE-interference-victim UE may steer its null on the receiving pattern towards the interference source, like the inter-UE-interference oppressor UE. On the other hand, at the inter-UE-interference oppressor UE the null-steering is implemented for the Tx or transmission pattern, for example by beamforming, like in the inter-UE-interference-victim UE. The inter-UE-interference oppressor UE will place the null on its radiation pattern to be aligned with the direction towards the inter-UE-interference-victim UE. Thus, by placing the nulls at the respective patterns at the two UEs which are subjected to interference the interference level may be reduced substantially. Naturally, also a plurality of nulls may be placed at appropriate locations in the beam pattern.

### Coordinated UL Sub-Band Allocation Based on UE Distribution

In accordance with yet another embodiment, a coordinated UL sub-band allocation may be implemented. The base station may have all information about the UEs within its coverage area which may include information about the positioning of the UEs, i.e., where they are located, e.g., at least roughly, in the coverage area, and/or interference sources which may be reported to the base station from respective victim UEs. The base station may use this information for determining an appropriate UL band allocation which reduces the inter-UE-interference, thereby reducing interferences among the UEs and resulting in an improved spectral utilization of the resources available.

### DL Spectrum Allocation

The embodiments described so far concern basically the UL spectrum allocation, however, in accordance with further embodiments, instead of the UL spectrum allocation or in addition to the UL band allocation, also a DL spectrum allocation may be implemented by the base station.

For example, in accordance with a first embodiment, a full spectral occupancy of the DL spectrum may be implemented, i.e., for each or for a subset of the spatial links 206, which are shown in Fig. 4 to Fig. 10, the complete frequency band may be allocated for the downlink communication, referred to in the respective figures as DL band. In accordance with embodiments using a full spectral occupancy approach for the DL spectrum allocation, it is preferable that the respective UEs are capable of suppressing a self-interference sufficiently, i.e., to a level below a predefined threshold.

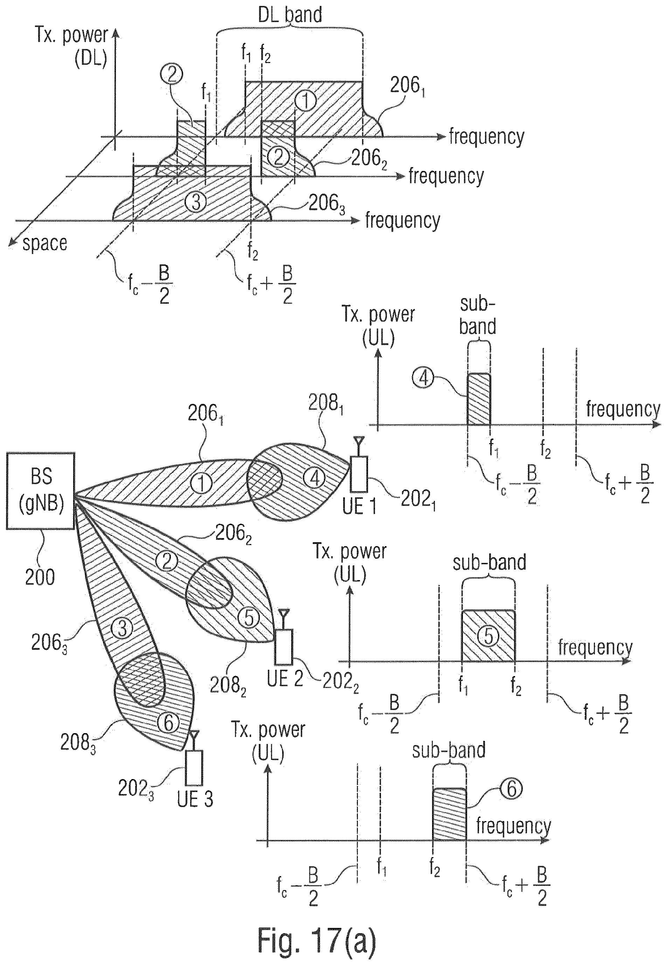

In accordance with other embodiments, a partial spectral occupancy may be implemented and Fig. 17(a) illustrates an embodiment implementing such a partial downlink band occupancy which may be applied, for example, when a specific UE is not capable of suppressing itself-interference signal. Fig. 17(a) illustrates the base station 200 providing for the spatial diversity by employing the three spatial links or beams 206₁ to 206₃ for transmitting to the respective UEs 202₁ to 202₃. The respective frequency bands used on the respective links 206₁ to 206₃ are not the same and they do not cover the entire available frequency band from f_{c} - B/2 to f_{c} + B/2, where B is the bandwidth of the available frequency band. The DL band on the first spatial link 206, has a bandwidth less than B and extends from a frequency f₁ to the upper end f_{c} + B/2 of the frequency band. On spatial link 206₂, the DL band ② terminates at the upper and lower ends of the frequency band, however, it is not occupied between frequency f₁ and frequency f₂. In the third spatial link 206₃, the DL band ③ extends from the lower end of the frequency band f_{c} -B/2 to the frequency f₂. Thus, in the first DL band ① on the first spatial link 206₁, there is an unoccupied or free sub-band at the beginning of the frequency band, in the second link 206₂ there is an unoccupied or free sub-band at the center of the frequency band and at the third link 206₃ there is an unoccupied or free sub-band at the end of the frequency band. On the other hand, the UL sub-bands for the respective UEs are located in the frequency band at those sub-bands which are not occupied by the respective DL bands. More specifically, the sub-band ④ for UE 202, is located between the lower end of the frequency band and the frequency f₁ which corresponds to the sub-band in the downlink which is not occupied on link 206₁. Likewise, the sub-band ⑤ for the UE 202₂ is located between frequencies f₁ and f₂ which are not occupied in the DL band on link 206₂, and the sub-band ⑥ for the uplink of the UE 202₃ is located between the frequency f₂ and the upper end of the frequency band which is not occupied by the corresponding downlink band on the third link 206₃.

The above described embodiment employing partial spectral occupancy may be applied where one or more of the links 206 provided by the base station 200 cannot discriminate the UEs, for example in a situation in which a location or position of a UE cannot be resolved when applying a minimum beam width for the respective spatial links at a base station. In accordance with yet other embodiments, the partial spectral occupancy may be applied in situations in which the one or more UEs cannot suppress their own self-interference signal to a sufficiently low level, for example to be below a predefined threshold, like the receiver noise floor level. In such a situation, the base station may free, i.e., not transmit over, the corresponding sub-band as has been described above with reference to Fig. 17(a).

With regard to the above referenced embodiments dealing with a full and partial DL allocation, in accordance with embodiments, it is preferred that at least a partial self-interference suppression is implemented at the UE so as to avoid a saturation of a local receiver at the UE side. A receiver saturation blocks the UE from receiving any DL band transmission which may be particularly relevant for the partial DL allocation in accordance with which the UE may be deceived by the fact that the DL is located in an adjacent band which does not overlap. As some UEs may lack a strict filtering at the transceiver RF input, the UL sub-band may saturate the UE's local receiver so that either a tunable RF filter is required or a partial UL-caused self-interference cancellation.

### Reduced DL band allocation with partial SIC at the UEs

In the case the UE does not have enough capability to reduce the self-interference (SI) to the receiver noise floor, the allocation of an UL (sub-)band overlapping with the DL (sub-) band is not useful as power may be wasted and unwanted interferences all over the network may be generated. This is due to the inability of UE to decode the information within the DL sub-band that overlaps with the UL sub-band. Therefore, excluding this sub-band from the DL transmission signal in the first place may be useful. However a UE that is capable of suppressing the self-interference to DL-signal-reception-power levels may omit the needs for having a tunable RF filter in the UE. In practical terms, the UE may suppress the self-interference to the DL-signal-reception-power level and both signalsthe DL band signal and the UL residual SI one -- are then down-converted to the digital domain. In the digital domain, the UL residual SI signal is removed by means of digital filters. Thus, the UE may require a fixed RF filter that allows the entire supported band to pass through, while the SI in the RF domain is done in tunable manner based on the UL sub-band allocation.

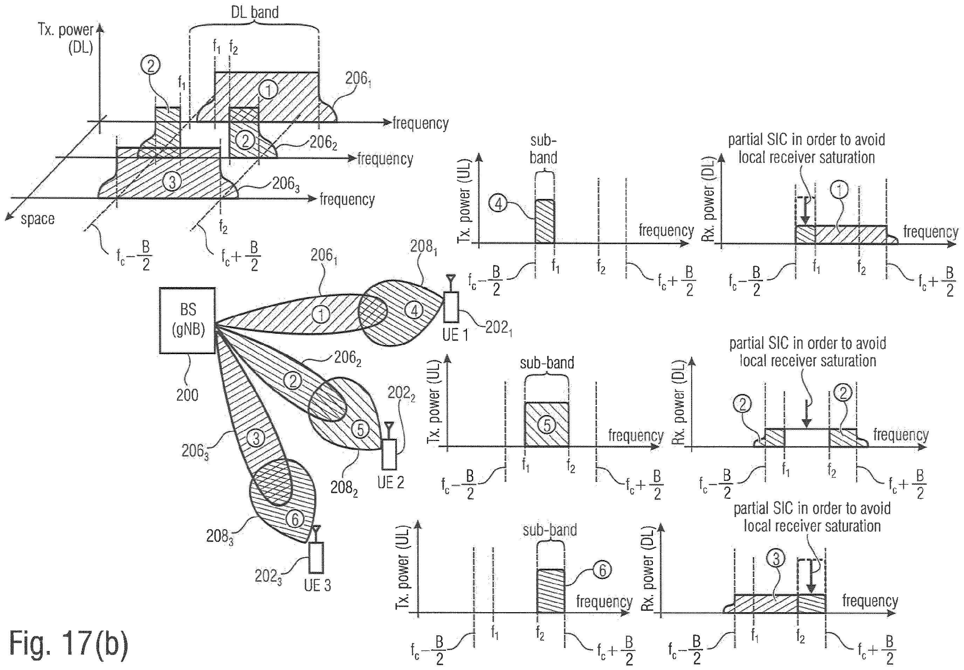

Fig. 17(b) illustrates an embodiment implementing such a reduced DL band allocation with partial SIC at the UEs. Fig. 17(b) illustrates a system similar to Fig. 17(a) so that elements already described with reference to Fig. 17(a) have associated therewith the same reference signs and are not described again. Thus, Fig. 17(b) illustrates an embodiment of the duplexing scheme in a point-to-multipoint shared access full-duplex wireless duplexing scheme associated with spatial diversity scenario. A partial DL band allocation is done by the BS 200, where a UE is not capable of decoding the DL band information that is overlapped with its own UL sub-band. A partial self-interference cancellation (SIC) at the UE is implemented to avoid saturating the front-ends at the UE receiver.

It is noted that partial and full DL spectrum allocation may be used in combination, i.e., some of the UEs may receive a full DL spectrum allocation whereas others only receive a partial DL band spectrum allocation, i.e., the embodiments of Fig. 4 and Fig. 17(a), and the embodiments of Fig. 4 and Fig. 17(b) may be combined.

### Advanced Base Station Capabilities with Limited Beamforming at the UEs

In accordance with embodiments the base stations may discriminate a UE using a very narrow, or a pencil, beam, while the UEs may have limited degree of freedom in terms of beamforming, for example only a beamforming capability for null-steering purposes rather than forming a beam towards the base station.

### Device-to-Device Direct Concurrent Links

In accordance with further embodiments, the UEs may communicate directly with each other, for example using a side-link communication, like the PC5 interface, or a short range communication or any other kind of device-to-device communication available. The advantage of this embodiment is that it reduces energy consumption and UE-to-BS traffic. At the UE the low energy links among the UEs in the network reduce the SIC required power level making such links suitable for a full-duplex communication. Having a full-duplex link among the devices may reduce the required spectrum to the half, which makes such a scheme attractive in terms of spectrum and power saving.

### Guard Bands

When considering two adjacent bands, a direct neighboring of the bands, without leaving any spectral gap, may be hampered by the difficulty of realizing steep skirt filtering. Filters combining steep responses and tunability features may be difficult to implement, in particular when it comes to a compact dimension or form of the filter.

Therefore, in accordance with embodiments, spectral guard bands may be provided to preserve the natural performance in terms of spectral efficiency. The guard bands are advantageous as they avoid out-of-band, OOB, emissions from one band which may mask another band while cancellation techniques may be limited in SIC performance. The spectral guard bands may protect a receiving band from being swamped by a neighboring UE currently transmitting.

### (2) Flexible Time-Division Multiple Access

In the embodiments described so far, a frequency-division multiple access has been described, however, the present invention is not limited to such embodiments. Rather, in accordance with further embodiments, the inventive concept of exploiting the full-duplex scheme at the base station may also be implemented together with a TDD scheme at the UE side.

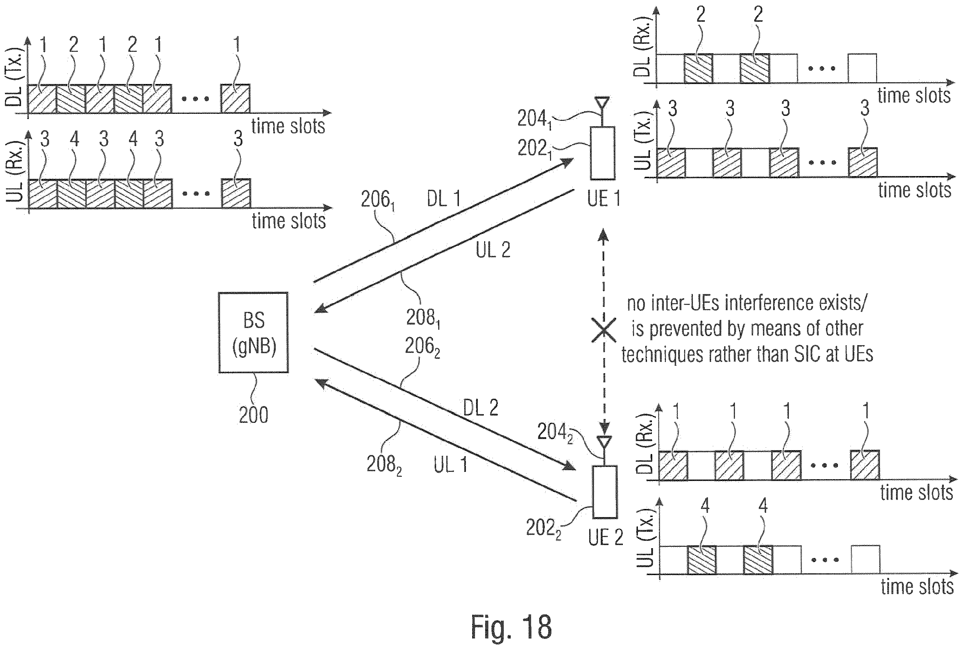

Fig. 18 illustrates an embodiment for a flexible time-division multiple access in accordance with the present invention. Fig. 18 is a schematic representation of a wireless communication network including a base station 200 and a first UE 202, and a second UE 202₂ served by the base station 200. The UEs may be within the coverage area of the base station 200 and, although only two UEs are shown, more than two UEs may be provided within the coverage area. Fig. 18 is representing, for example, a part of the wireless communication network described above with reference to Fig. 1 and Fig. 2. The base station 200 implements a full duplex scheme in that, as indicated in the diagram in the upper left-hand part of Fig. 18, signals are concurrently transmitted towards the UEs in the downlink and received from the UEs in the uplink. The UEs implement a TDD scheme and UE 202, receives from the base station 200 in time slots ② and transmits to the base station 200 in time slots ③ which do not overlap in time. In a similar way, UE 202₂ receives from the base station 200 during the downlink in time slots ① and transmits in the uplink to the base station 200 in the time slots ④ which do not overlap with time slots ①. However, as can be seen, time slots ① and ③ as well as time slots ② and ④ overlap in time. In accordance with the inventive approach, the base station 200 provides for a spatial diversity in that the respective UEs 202₁, 202₂ receive the downlink communication via respective spatial links 206₁, 206₂ so that the downlink time slots ① for the second UE 202₂ are transmitted using the beam or spatial link 206₂, whereas the time slots for the downlink communication from the base station 200 to the first UE 202₁, namely time slots ②, are transmitted on the first beam or spatial link 206₁. The base station 200 receives the uplink time slots from the respective UEs at the same time as the downlink time slots are sent, more specifically, when sending downlink time slots for the second UE 202₂, at the same time, uplink time slots are received from the first UE 202, and, when transmitting downlink time slots for the first UE at the same time, uplink time slots from the second UE are received. The respective UEs transmit to the base station 200 using respective links 208₁, 208₂.

Conventionally, a full duplex bidirectional link communication may be implemented when both communication sides use SIC techniques to rescue their reception signal from being swapped by the self-interference signals. However, in accordance with embodiments of the present invention, the full duplex capabilities of the base station is exploited together with UEs having TDD capability only. In other words, the need to have the full duplex functionality implemented at both communication sides is avoided and the SIC capability is only implemented at the BS side. The SIC techniques at the UE side, in accordance with embodiments, are avoided as the concurrent links, the uplink and the downlink, among the base station and the UEs are allocated such that distinctive spatial channels are occupied or, in other words, by transmitting from the base station via distinctive spatial channels 206₁, 206₂ to the different UEs 202₁, 202₂. Stated differently, the base station 200 may use its full-duplex capabilities while the UEs may still operate in the TDD scheme, and the base station may suppress its own transmission signals, e.g., using SIC, so as to allow the reception of the concurrent incoming reception signals from the UEs in the uplink. Thus, the embodiments described herein allowing for a full-duplex scheme at the base station side in conjunction with a TDD scheme at the UE side are advantageous they allows the leverage of the spectral efficiency benefits of the full-duplex scheme in the wireless network while the UEs do not have to implement any SIC mechanism.

In the following, further embodiments for implementing the flexible time-division multiple access in accordance with the present invention will be described in more detail.

### Inter-UE Interference Suppression

To avoid the need to implement at the UE side SIC techniques, different mechanisms for addressing inter-UE interferences are provided in accordance with embodiments of the present invention. The subsequently described embodiments may be used independent from each other or in combination.

### UE null-steering

In accordance with the first embodiment a UE null-steering capability and/or beamforming may be implemented. In accordance with such embodiments, for avoiding inter-UE interferences, the one or more UEs may be provided with the possibility to steer one or more nulls towards an interference direction (similar to the embodiments described above with reference to Fig. 9 and Fig. 10). This may be implemented at any of the UEs and, in the following, a UE which is subject to interferences from one or more other UEs that are within its band of interest is referred to as the inter-UE-interference-victim UE, and the UE that radiates signals towards a direction, which may not be a necessary direction, like the direction of a side lobe of the pattern, thereby causing interferences at one or more other UEs (victim UEs) is referred to as an inter-UE-interference oppressor UE.

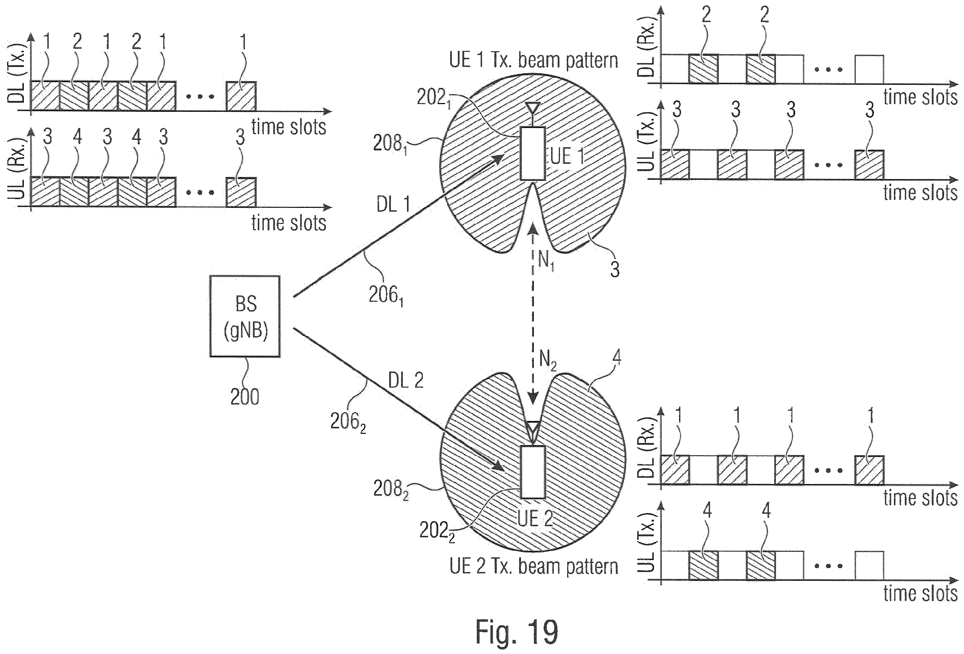

Fig. 19 shows an embodiment for implementing a null-steering technique at the respective UEs in the wireless communication network of Fig. 18 so as to suppress inter-UE interferences. When compared to Fig. 18, Fig. 19 schematically represents the respective Tx or transmit beam patterns 208₁, 208₂ of the respective UEs 202₁, 202₂. The respective null positions N1, N2 in the beam patterns 208₁, 208₂. The respective null positions N1, N2 are in the transmit beam patterns of the respective UEs 202₁, 202₂. The UEs 202₁, 202₂ will not transmit at the same time slots, however, when considering a situation in which UE 202, transmits towards the base station 200, the transmission beam pattern 208₁ may cause an interference at UE 202₂, which is then the inter-UE-interference-victim UE so that receiving data at the same time on the downlink time slots ① may be disturbed. However, when placing the null N1 of the UE 202₁, which is the inter-UE-interference oppressor UE in a way as shown in Fig. 19, such interference may be avoided or reduced. The same applies for UE 202₂ when transmitting during time slots ④. For avoiding interferences in the down link time slots ② of the first UE 202₁, the null N2 of the beam pattern 208₂ is steered to face the UE 202₁, thereby suppressing interference in the same way as described above.

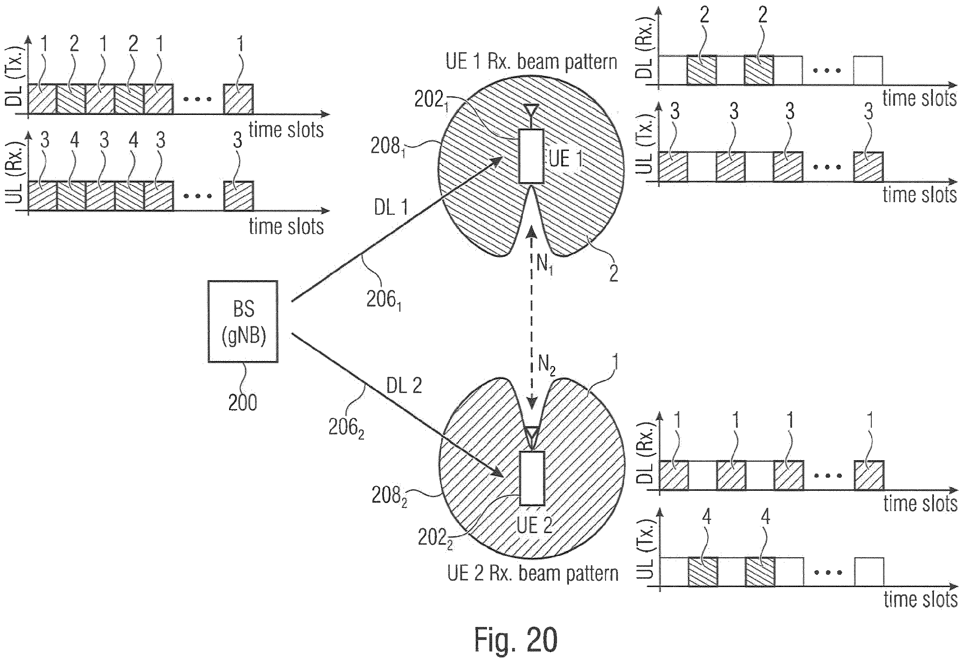

In accordance with other embodiments, the null-steering may be performed in the respective receive beam patterns of the UEs 202₁, 202₂ as is schematically represented in Fig. 20. Fig. 20 is similar to Fig. 19 except that the respective receive patterns of the two UEs are shown transmitting on time slots ① and ② to the base station 200. Thus, in a situation in which the first UE 202, transmits in time slots ③ to the base station 200, the UE 202₂, which at the same time receives on link 206₂ in the time slots ④ from the base station, controls its receive beam pattern 208₂ such that the null position N2 faces the first UE 202₁, thereby reducing the signals received from this direction at the UE 202₂, thereby suppressing interference. In a similar way, in a situation in which the second UE 202₂ transmits to the base station 200 on the spatial link 206₂ during time slots ④, at the same time the first UE 202, receives via the first spatial link 206, from the base station 200 in time slots ②. The first UE 202, controls its pattern such that the null position N1 is directed towards the second UE 202₂ so that the signal level received from the direction facing UE 202₂ is reduced, thereby reducing the interference level which the first UE 202, experiences due to the concurrent transmission/reception of data by the respective neighboring UEs.

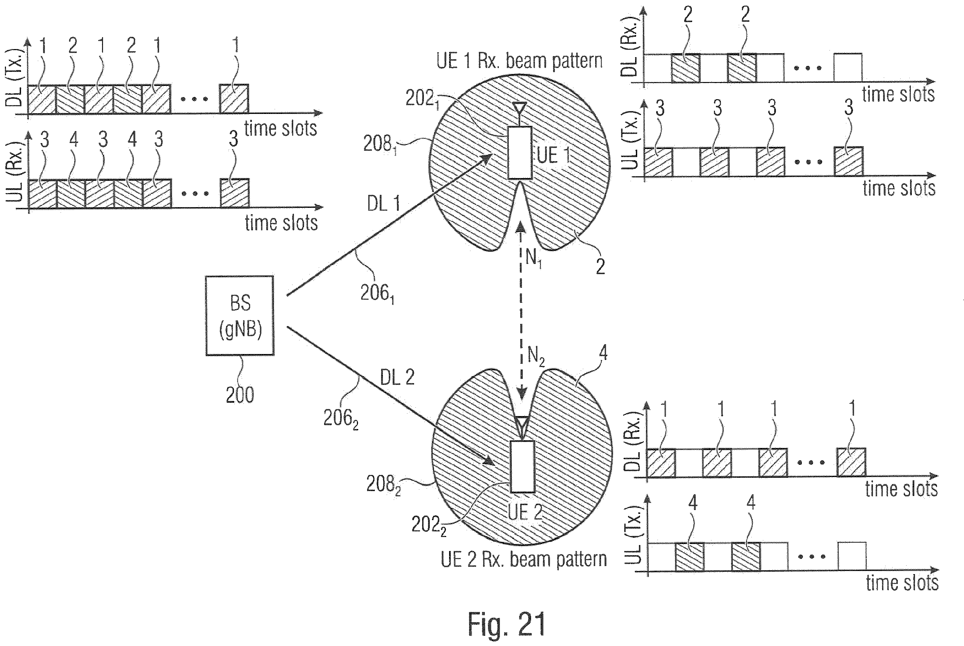

In accordance with yet further embodiments, the suppression of interference may be even further improved when combining the approaches of Fig. 19 and Fig. 20 in a way as explained with reference to Fig. 21. Fig. 21 illustrates a situation in which it is assumed that the first UE 202, receives from the base station 200 via the first spatial link 206₁ during time slots ② while, at the same time, the second UE 202₂, via the second spatial link 206₂ transmits to the base station 200 using time slots ④. At this situation, both UEs are controlled to place their null positions in the respective beam patterns to face the other UE so that the second UE 202₂ upon transmitting to the base station 200 suppresses transmissions in the direction towards the first UE 202₁, while, at the same time, the beam pattern of the first UE 202₁, due to its position of the null N1, will receive no or strongly attenuated signals from the UE 202₂, so that the interference level is even further decreased when compared to the situations in Fig. 19 and Fig. 20, as the signal transmitted from the second UE towards the first UE is reduced, and the signal receiving properties of the first UE are such that only a small amount of a signal from the direction of the second UE is actually received by the antenna of the first UE.

In accordance with further embodiments regarding the above described null-steering, information about an inter-UE-interference channel among the respective UEs may be provided. More specifically, in accordance with embodiments placing a null towards another UE is based on knowledge about the inter-UE-interference channel. For example, in the absence of a direct communication channel among the UEs, the estimation of the inter-UE-interference channel may be communicated or transferred via the base station among the UEs. The estimation of the inter-UE-interference channel may be performed by the UEs themselves through listening to the interference channels, for example listening to pilots provided in the signal. In accordance with embodiments, any substantial change of the inter-UE-interference level, for example a change of more than a predefined value, may trigger a channel estimation updating procedure which will then be communicated to the other entities involved in the communication process either by a direct communication among the UEs or via the base station.

It is noted that, although the embodiments of Fig. 19 to Fig. 21 have be described for a system operating in accordance with the TDD scheme, the present invention is not limited to this. Rather, the embodiments of Fig. 19 to Fig. 21 may also be applied to the beam patterns when UEs operating in accordance with the FDD scheme described above.

### Base Station Scheduling Based on UE Distribution

In accordance with further embodiments, interferences among transmit signals or uplink signals from the different UEs served by a base station with downlink time slots may be avoided by allowing the base station to schedule the potential interfering time slots to those UEs that are far away from each other, at least far enough to allow for a sufficient attenuation of any interference signal, for example a sufficient pathloss between the UEs so that, once the interference signal reaches the UE, if at all, it has been attenuated to a level below a predefined threshold.

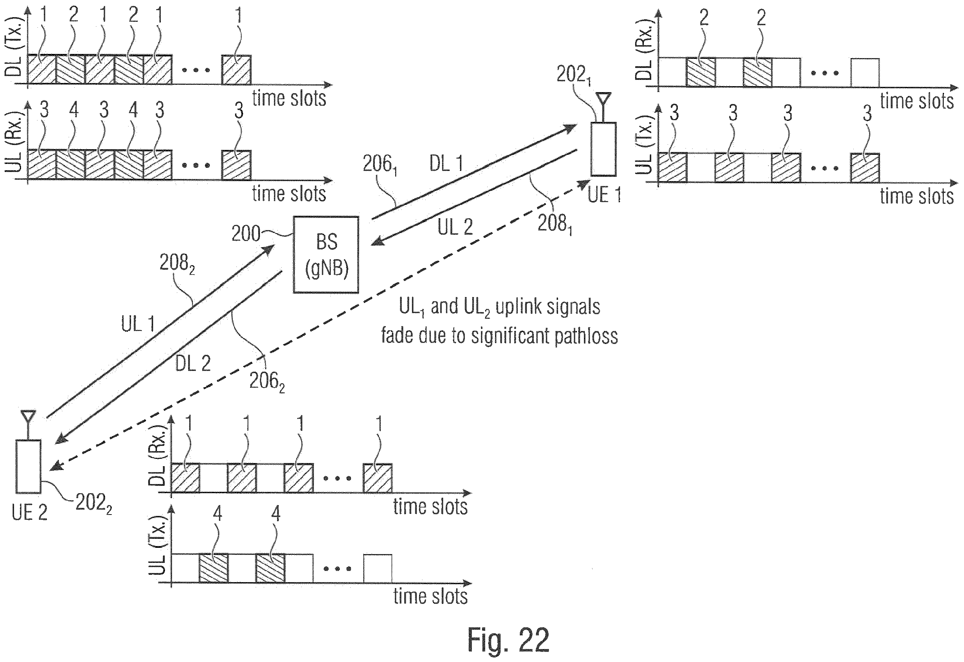

Fig. 22 illustrates an embodiment for base station scheduling based on UE distribution and it is assumed that the UE 202, and the UE 202₂ are located at a sufficient distance from each other so that, for example, uplink signals on the uplink connections 208₁, 208₂ sufficiently fade due to the pathloss in view of the distance between the two UEs. For UEs 202₁, 202₂. The base station 200 may schedule the respective time slots in a way as described above, namely that the time slots ① are used by the second UE 202₂ for receiving from the base station 200 while, at the same time, the first UE 202, transmits on the time slots ③ to the base station, however, due to the significant pathloss because of the distance among the UEs 202₁ and 202₂, the signal from UE 202, towards base station 200 will have faded at UE 202₂ to a sufficient degree so that there is substantially no or negligible interference experienced at UE 202₂. In other words, the base station 200 of the embodiment of Fig. 22 schedules the UEs 202₁ and 202₂ to share the uplink and downlink resources, time slots in a way as mentioned above, and the base station 200 selects the UEs based on the long haul which assures that the UL time slots ③, ④ of each UE attenuates enough, for example due to the wireless channel pathloss, before it actually reaches the other UE and causes an interference with its downlink.

### Asymmetrical and Dynamic Timeslot Allocation Enabled by Beamforming Capabilities at the Base Station

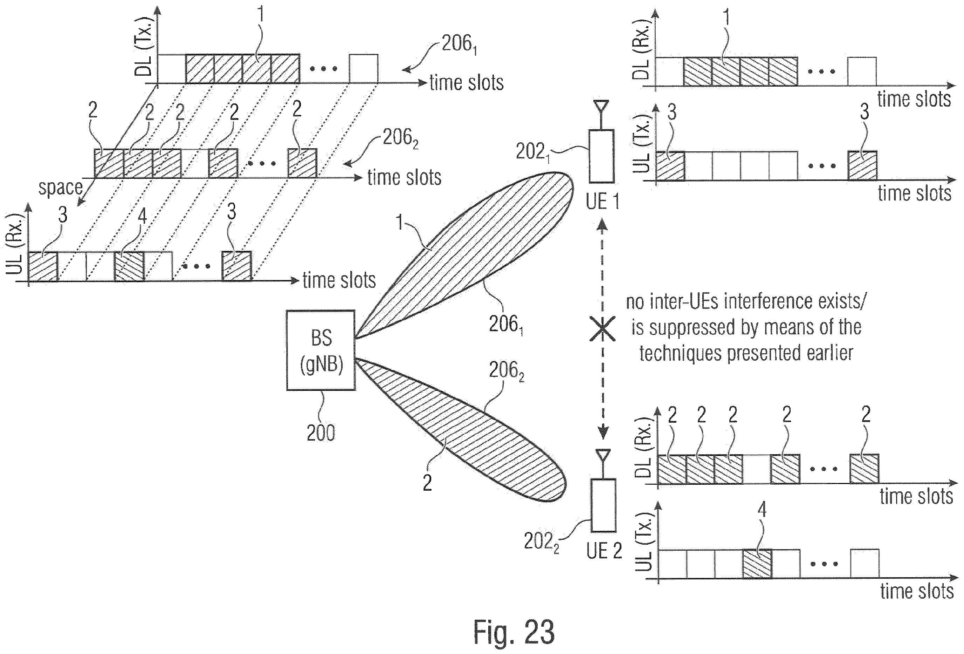

Fig. 23 shows another embodiment of the inventive approach implementing an asymmetrical and dynamic time slot allocation by receive beamforming and SIC capabilities at the base station. In the embodiment of Fig. 23, the base station 200 is shown which provides spatial diversity by the beams 206₁, 206₂ for transmitting to the UEs 202₁, 202₂ which operate in accordance with the TDD scheme. Other than in the embodiments described earlier, the respective time slots are not scheduled alternatingly, rather, in the downlink a number of consecutive time slots is allocated to the respective UEs, wherein the number of time slots allocated to the UEs may be the same or may be different. The embodiment of Fig. 23 illustrates an asymmetric allocation of downlink time slots on the different spatial links 206₁, 206₂ in such a way that the first UE 202₁ has allocated initially four consecutive time slots ①, while the second UE 202₂ has initially allocated three consecutive time slots ②. The uplink connection to the base station 200 is performed by the respective UEs using time slots ③ and ④, wherein the first UE 202, transmits to the base station 200 during time slots ③ overlapping with the downlink time slots ② but not overlapping with the downlink time slots ①, and the UE 202₂ transmits to the base station 200 during time slots ④ overlapping with downlink time slots ① but not with downlink time slots ②. At the base station 200, using SIC, the respective signals from the different UEs are detected.

The embodiment described with reference to Fig. 23 is advantageous as it addresses the fact that asymmetrical traffic is usually encountered during network operation. Assuming that the base station 200 is capable of forming the beams 206, and 206₂ to cover different geographic regions so as to connect to a UE or to a group or cluster of UEs in a close arranged at this region, while the UE still operate in the TDD mode, the dynamic resource location, time slot allocation, is provided. As is shown in Fig. 23, the UL time slot allocation in the presence of a concurrent downlink stream towards different UEs is enabled by means of the self-interference cancellation at the base station.

### Ultra-Dense Cluster-Like UE Distribution

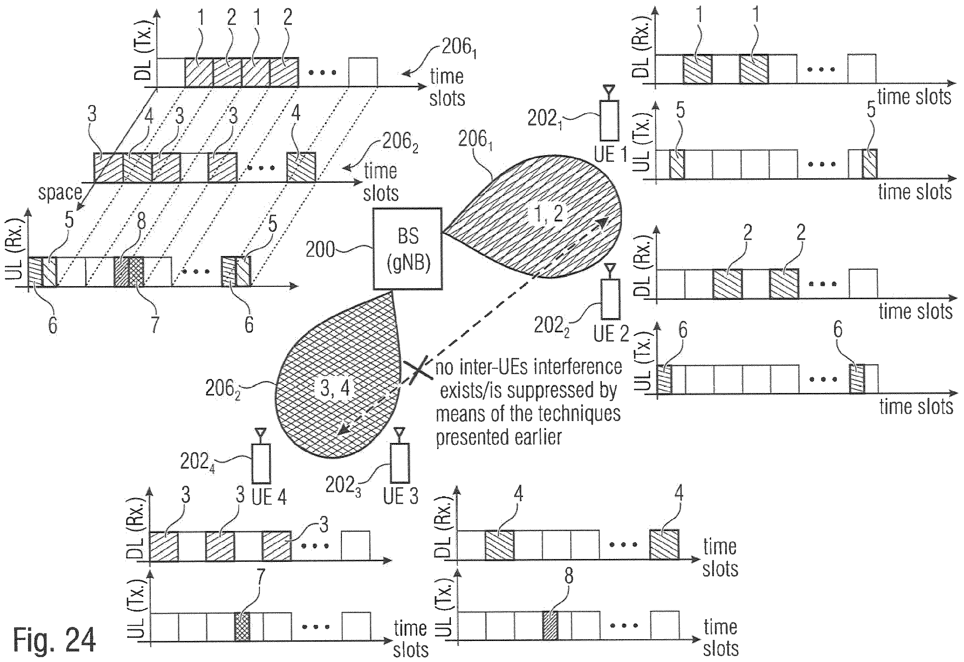

The embodiment described above with reference to Fig. 23 describing the asymmetrical and dynamic time slot allocation may be extended to a scenario where a group of UEs are located in close proximity. In this case, the base station may not be in a position to discriminate each of the UEs being in close proximity with the spatial link or beam directed towards these UEs, and the UEs may not have implemented any technology or circuitry for handling inter-UE interference. In accordance with embodiments, the UEs share the time slots for uplink. More specifically, as is depicted in Fig. 24, in accordance with this embodiment, it is assumed that the base station 200 serves four UEs 202₁ to 202₄, of which UEs 202₁ and 202₂ are located in close proximity in such a way that the spatial link 206, cannot discriminate among the two UEs 202₁, 202₂. In a similar way, UEs 202₃ and 202₄ are located in such a close proximity that they cannot be discriminated by the second spatial beam 206₂. To serve these UEs which do not have a UE interference suppressing technique implemented therein, in accordance with this embodiment, the base station schedules the downlink time slots ① and ② the downlink time slots ③ and ④ for the four UEs in a way as shown in the upper left-hand part of Fig. 24, so that each of the UEs receives the downlink transmission from the base station 200 at the respective time slots as indicated in the diagrams associated with the different UEs.

When transmitting to the base station 200, the base station 200 will receive the transmission from the respective UEs in the uplink time slots and, since UE 202₁ and UE 202₂ cannot be discriminated by the spatial link 206₁, rather than assigning to each of the UEs a complete time slot, the uplink time slots sent via the link 206, will be shared by the two UEs so that, for example, UE 202₂ uses one part ⑥ of the time slot for the uplink while UE 202, uses another part ⑤ of the same time slot and these parts may be of the same length or may be of different lengths. In a similar way, UEs 202₃ and 202₄ share their uplink time slots and use respective parts ⑦ and ⑧which are received in a way as shown in the diagram at the base station 200. Thus, Fig. 24 extends the embodiment of Fig. 23 to more than one UE served via a respective spatial link of the base station 200.

### Interferences Among UEs Not Having Inter-UE-Interference Cancellation Capabilities

The embodiments described above with reference to Fig. 23 and Fig. 24 cover a situation in which no inter-UE-interference among the UEs exists or in which the level of interference is sufficiently low, for example below a predefined threshold.

In the following, embodiments will be described for dealing with situations in which inter-UE-interferences exist and which may be handled by the inventive approach despite the fact that the respective UEs may not include any inter-UE-interference cancellation techniques.

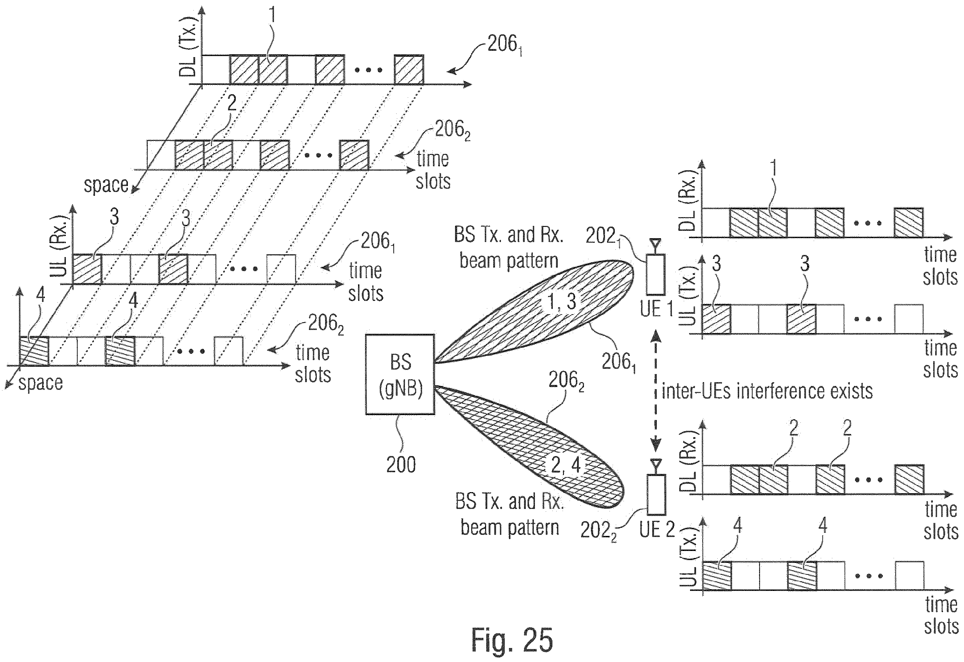

In accordance with embodiments, the base station 200 may discriminate the uplink time slots from the respective UEs based on the geographical locations of the UEs and, thereby, may receive concurrently two uplink time slots originating from different UEs. This may be used to synchronize the uplink time slots and avoid interference with other downlink time slots, as is schematically described with reference to Fig. 25. The uplink time slots are discriminated by the base station 200 on the basis of the spatial links 206₁, 206₂ so that, upon receiving a transmission, the base station 200 may decide from which of the UEs the uplink time slot originated. As depicted in Fig. 25, the base station 200 forms respective transmit and receive beam patterns 206₁, 206₂ for transmitting to/receiving from the UEs 202₁ and 202₂, respectively. The first spatial link or beam 206, transmits to the UE 202, using time slots ① and receives during time slots ③ from the UE 202₁, whereas the second spatial link 206₂ transmits to the second UE 202₂ on the time slots ② and receives during time slots ④. The receive time slots at the UE, namely time slots ③ and ④, are discriminated or distinguished at the UE 200 due to the different geographical location from which the respective uplink time slots were transmitted.

### (3) General

It is noted that the base station, in accordance with the embodiments described herein, does not need to cancel the downlink active self-interference continuously. Rather, in accordance with embodiments, for example to save power, the cancellation of the DL signal may be implemented only in situations where it is actually needed. In other words, only in case of an active UL the base station will apply a self-interference cancellation process to cancel its concurrent active DL signal. In case no uplink is active on one or more specific resources the self-interference cancellation process may be avoided or disabled for these resources.

With regard to the above described embodiments it is noted that although the figures show that all sub-bands may be of equal bandwidth the present invention and all of its embodiments is not limited to such equal-sub-band-widths. Rather, the different UEs may also have sub-bands of different widths as is, for example, shown in Fig. 4 and Fig. 5 above.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

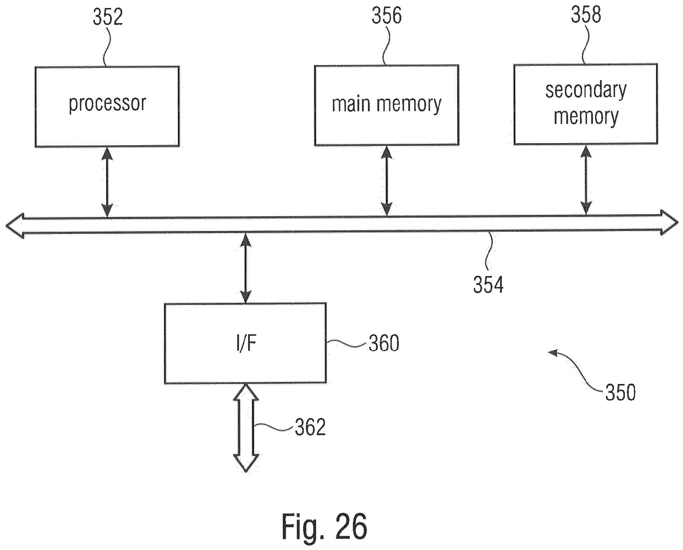

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 26 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### Abbreviations

- FDR: Full-duplex radios
- FD: Full-duplex
- SI: Self-interference
- SIC: Self-interference cancellation
- OOB: Out-of-band
- DL: Downlink
- UL: Uplink
- OFDM: Orthogonal frequency-division multiplexing
- TDD: Time division duplexing
- TDM: Time division multiplexing
- FDD: Frequency division duplexing
- FDM: Frequency division multiplexing
- UE: User equipment
- BS: Base station
- gNB: 3GPP term for BS
- 5G: Fifth generation
- Tx: Transmitter
- Rx: Receiver
- MIMO: Multiple input multiple output
- MU-MIMO: Multi-user MIMO
- M-MIMO: Massive MIMO
- FWA: Fixed wireless access
- SNR: Signal-to-Noise Ratio
- RF: Radio frequency
- CPE: Customer premises equipment
- eMBB: enhanced mobile broadband

### References

[1] R. Askar, T. Kaiser, B. Schubert, T. Haustein and W. Keusgen, "Active self-interference cancellation mechanism for full-duplex wireless transceivers," in Cognitive Radio Oriented Wireless Networks and Communications (CROWNCOM), 2014 9th International Conference on, 2014.
[2] R. Askar, B. Schubert, W. Keusgen and T. Haustein, "Agile Full-Duplex Transceiver: The Concept and Self-Interference Channel Characteristics," in European Wireless 2016; 22th European Wireless Conference, Oulu, 2016.
[3] R. Askar, B. Schubert, W. Keusgen and T. Haustein, "Full-Duplex Wireless Transceiver in Presence of I/Q Mismatches: Experimentation and Estimation Algorithm," in IEEE GC 2015 Workshop on Emerging Technologies for 5G Wireless Cellular Networks - 4th International (GC'15 - Workshop - ET5G), San, 2015.
[4] R. Askar, N. Zarifeh, B. Schubert, W. Keusgen and T. Kaiser, "I/O imbalance calibration for higher self-interference cancellation levels in Full-Duplex wireless transceivers," in 5G for Ubiquitous Connectivity (5GU), 2014 1st International Conference on, 2014.
[5] R. Askar, A. Hamdan, W. Keusgen and T. Haustein, "Analysis of Utilizing Lossless Networks for Self-Interference Cancellation Purpose," in 2018 IEEE Wireless Communications and Networking Conference (WCNC) (IEEE WCNC 2018), Barcelona, 2018.
[6] R. Askar, A. Hamdan, W. Keusgen and T. Haustein, "Analysis of utilizing lossless networks for self-interference cancellation purpose in full-duplex wireless transceivers," in The 4th International Workshop on Smart Wireless Communications (SmartCom 2017), Rome, 2017.
[7] R. Askar, B. Schubert, F. Undi, W. Keusgen and T. Haustein, "Successive Method to Improve on the Active Self-Interference Cancellation Technique," in The 4th International Workshop on Smart Wireless Communications (SmartCom 2017), Rome.
[8] R. Askar, F. Baum, W. Keusgen and T. Haustein, "Decoupling-Based Self-Interference Cancellation in MIMO Full-Duplex Wireless Transceivers" 2018 IEEE International Conference on Communications Workshops (ICC Workshops): Third Workshop on Full-Duplex Communications for Future Wireless Networks, 2018.
[9] NGMN Alliance, "Test and Technology Building Block (TTBB)," 2017.

## Claims

1. A base station for a wireless communication system, the wireless communication system comprising a plurality of UEs, the plurality of UEs including at least a first UE and a second UE,
wherein the base station configured to serve the plurality of UEs,
wherein the base station is configured to
- provide a plurality of beams or spatial links for a wireless communication with the plurality of UEs, the plurality of beams including at least a first beam or spatial link for a wireless communication with the first UE and a second beam or spatial link for a wireless communication with the second UE,
- transmit to the first UE on the first beam or spatial link using frequency resources within a DL frequency band,
- transmit to the second UE on the second beam or spatial link using frequency resources within the DL frequency band, wherein the DL frequency band and a UL frequency band overlap at least partially, the overlapping parts of the DL frequency band and the UL frequency band defining an overlapping frequency band,
- concurrently transmit and receive in the overlapping frequency band, and
- cancel one or more transmission signals at least in presence of one or more concurrent receive signals from the first UE or from the second UE in the overlapping frequency band,and
wherein the base station is configured to transmit to and receive from the first UE and the second UE using respective frequency resources in the overlapping frequency band.

2. The base station of claim 1, wherein the base station is configured to receive from the first and second UEs on a UL sub-band which only partially overlaps with a DL sub-band on which the base station is configured to transmit to the first and second UEs.

3. The base station of claim 1, wherein the base station is configured to receive from the first and second UEs on a first UL sub-band and on a second UL sub-band which are offset from each other by a free sub-band, and wherein the base station is configured to transmit to the first and second UEs in the free sub-band.

4. The base station of claim 1, wherein the base station is configured to transmit to the first UE and the second UE using frequency resources in respective non-overlapping DL sub-bands.

5. The base station of claim 1, wherein the base station is configured to transmit to the first and second UEs on a first DL sub-band and on a second DL sub-band which are offset from each other by a free sub-band, and wherein the base station is configured to receive from the first and second UEs in the free sub-band.

6. The base station of claim 1, wherein no signal cancellation is implemented at the first UE and at the second UE to cancel one or more transmission signals at least in presence of one or more concurrent receive signals from the base station in the overlapping frequency band.

7. The base station of any one of the preceding claims, wherein the base station is configured to discriminate an UL transmission from the first UE and an UL transmission from the second UE using spatial properties of the respective UL transmissions.

8. A user device, UE, for a wireless communication system, the wireless communication system comprising a plurality of UEs and at least one base station, the plurality of UEs including the UE and at least one further UE, and
wherein the UE and the further UE are configured to be served by the base station, the base station is configured to provide a plurality of beams or spatial links for a wireless communication with the plurality of UEs, the plurality of beams including at least a first beam or spatial link for a wireless communication with the first UE and a second beam or spatial link for a wireless communication with the second UE, and to cancel one or more transmission signals at least in presence of one or more concurrent receive signals from the UE or from the further UE in an overlapping frequency band,
wherein the UE is configured to receive from the base station on the first beam or spatial link using frequency resources within a DL frequency band, wherein the DL frequency band and a UL frequency band overlap at least partially, the overlapping parts of the DL frequency band and the UL frequency band defining the overlapping frequency band for concurrently transmitting and receiving,
wherein the UE is configured to transmit to and receive from the base station using respective frequency resources in the overlapping frequency band.

9. The user device, UE, of claim 8, wherein the UE is configured to transmit to the base station on a UL sub-band which only partially overlaps with a DL sub-band on which the UE is configured to receive from the base station.

10. The user device, UE, of claim 8, wherein the UE is configured to transmit to the base station on a UL sub-band and to receive from the base station in a free sub-band, the free sub-band offsetting the UL sub-band from a further UL sub-band on which the further UE transmits to the base station.

11. The user device, UE, of claim 8, wherein UE is configured to receive from the base station using frequency resources in a DL sub-band not overlapping with a further DL sub-band on which the further UE receives from the base station.

12. The user device, UE, of claim 8, wherein UE is configured to receive from the base station on a DL sub-band which is offset by a free sub-band from a further DL sub-band on the second UE receives from the base station, and wherein the UE is configured to transmit to the base station in the free sub-band.

13. The user device, UE, of claim 8, wherein the UE comprises a plurality of antennas or an antenna array, the UE configured to control the antennas or the antenna array so as to set a receive beam pattern and/or a transmit beam pattern of the antenna such that a radiation towards the base station is stronger than a radiation towards the further UE.

14. The user device, UE, of claim 8, wherein the UE is configured to control the antennas or the antenna array so as to set a receive beam pattern and/or a transmit beam pattern of the antenna such that a null is directed towards the further UE.

15. A wireless communication method for a wireless communication system having a plurality of UEs, the plurality of UEs including at least a first UE and a second UE, and at least one base station, the base station configured to serve the plurality of UEs, the method comprising:
providing, by the base station, a plurality of beams or spatial links for a wireless communication with the plurality of UEs, the plurality of beams including at least a first beam or spatial link for a wireless communication with the first UE and a second beam or spatial link for a wireless communication with the second UE,
transmitting, by the base station, to the first UE on the first beam or spatial link using frequency resources within a DL frequency band,
transmitting, by the base station, to the second UE on the second beam or spatial link using frequency resources within the DL frequency band, wherein the DL frequency band and a UL frequency band overlap at least partially, the overlapping parts of the DL frequency band and the UL frequency band defining an overlapping frequency band,
concurrently transmitting and receiving, by the base station, in the overlapping frequency band, wherein one or more transmission signals are canceled by the base station at least in presence of one or more concurrent receive signals from the first UE or from the second UE in the overlapping frequency band, and
transmitting to and receiving from the base station, by the first and second UEs, using respective frequency resources in the overlapping frequency band.
